# EUROPEAN PATENT SPECIFICATION

(11) **EP 2 574 201 B1**
(45) Date of publication and mention of the grant of the patent: **18.05.2016**
(21) Application number: 12710367.9
(22) Date of filing: 24.02.2012
(51) Int. Cl.: F03D 9/00, F03D 15/00, F03D 7/02

(54) **POWER GENERATING APPARATUS OF RENEWABLE ENERGY TYPE AND OPERATION METHOD THEREOF**
VORRICHTUNG ZUR STROMERZEUGUNG AUS ERNEUERBARER ENERGIE UND BETRIEBSVERFAHREN DAFÜR
APPAREIL DE GÉNÉRATION D'ÉNERGIE DU TYPE À ÉNERGIE RENOUVELABLE ET SON PROCÉDÉ DE FONCTIONNEMENT

(30) Priority: 30.05.2011 WO PCT/JP2011/003005; 30.05.2011 WO PCT/JP2011/003000; 30.05.2011 WO PCT/JP2011/003002; 30.11.2011 WO PCT/JP2011/006694
(43) Date of publication of application: 03.04.2013
(73) Proprietor: Mitsubishi Heavy Industries, Ltd., Tokyo 108-8215 (JP)
(72) Inventor: HAMANO, Fumio, Tokyo 108-8215 (JP); HOKAZONO, Shigeru, Tokyo 108-8215 (JP); NAKAYAMA, Ken, Tokyo 108-8215 (JP); TSUTSUMI, Kazuhisa, Tokyo 108-8215 (JP); BALDINI, Francesco, London Greater London W1K 6WL (GB); CALDWELL, Niall, Loanhead Midlothian EH20 9TB (GB); DUMNOV, Daniil, Loanhead Midlothian EH20 9TB (GB); ABRAHAMS, Daniel, Loanhead Midlothian EH20 9TB (GB); LAIRD, Stephen, Loanhead Midlothian EH20 9TB (GB)
(74) Representative: Intès, Didier Gérard André
(86) International application number: PCT/JP2012/001299
(87) International publication number: WO 2012/164789

(56) References cited:
- WO-A2-2008/113699
- WO-A2-2010/085988
- US-A- 4 496 847
- US-A1- 2009 273 186

## Description

### Technical Field

The present invention relates to a power generating apparatus of renewable energy type, which generates power by transmitting rotation energy of a rotating shaft to a generator via a hydraulic transmission and supplies the power to a grid, and an operation method of the power generating apparatus of renewable energy type. The power generating apparatus of renewable energy type generates power from renewable energy such as wind, tidal current, ocean current and river current and, the power generating apparatus of renewable energy type, for instance, includes a wind turbine generator, a tidal generator, an ocean current generator, a river current generator or the like.

### Background Art

In recent years, from a perspective of preserving the environment, it is becoming popular to use a power generating apparatus of renewable energy type such as a wind turbine generator utilizing wind power and renewable energy type turbine generator such as a tidal current generator utilizing tidal. In the power generating apparatus of renewable energy type, a motion energy of the wind, the tidal current, the ocean current or the river current is converted into the rotation energy of the rotor and the rotation energy of the rotor is converted into electric power by the generator.

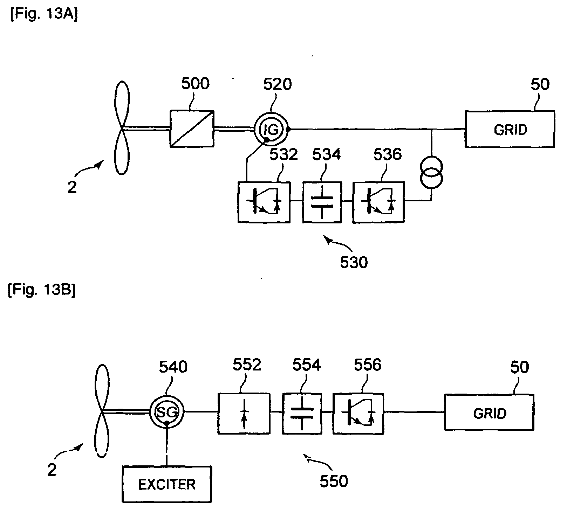

In this type of the power generating apparatus of renewable energy type, the generator is normally connected to the grid. As for a wind turbine generator, there are different types of generators and different ways of connecting the generator to the grid. A wind turbine generator using the connection shown in FIG.13A and FIG.13B is well known.

In the wind turbine generator of the type shown in FIG.13A, a secondary wound-rotor induction generator 520 is connected to the rotor via the step-up gear 500. The secondary wound-rotor induction generator 520 has a stator winding which is directly connected to the grid 50 and a rotor winding which is connected to the grid 50 via an AC-DC-AC converter 530. The AC-DC-AC converter 530 is formed by a generator-side inverter 532, a DC bus 534 and a grid-side inverter 536. The generator-side inverter 532 achieves a variable speed operation by controlling an electric current of the rotor winding to adjust a generator torque. Meanwhile, the grid-side inverter 536 converts the electric power received from the rotor winding of the secondary wound-rotor induction generator into AC power which conforms to a frequency of the grid. In the wind turbine generator of the type shown in FIG.13B, a synchronous generator 540 is connected to the rotor 2. The synchronous generator 540 is connected to the grid via an AC-DC-AC link 550. The AC-DC-AC link 550 is formed by a converter 552, a DC bus 554 and an inverter 556. The AC-DC-AC link 550 achieves the variable speed operation by adjusting the torque of the synchronous generator 540 and also converts the electric power generated in the synchronous generator 540 into AC power which conforms to the frequency of the grid 50.

A wind turbine generator similar to the type shown in FIG.13B, is disclosed in Patent Literature 1. In the wind turbine generator disclosed in Patent Literature 1, a synchronous generator connected to a rotor via a step-up gear is connected to a grid through a passive rectifier and an inverter.

Patent Literature 1 also proposes to connect a plurality of synchronous generators to the step-up gear and connect each of the synchronous generators to the grid via the passive rectifier and the inverter.

In recent years, power generating apparatuses of renewable energy type using a hydraulic transmission including a hydraulic pump and a hydraulic motor are attracting more attentions.

For instance, Patent Literature 1 discloses a wind turbine generator using a hydraulic transmission including a hydraulic pump rotated by a rotor and a hydraulic motor connected to a generator. In the hydraulic transmission of this wind turbine generator, the hydraulic pump and the hydraulic motor are connected via a high-pressure reservoir and a low-pressure reservoir. By this, the rotation energy of the rotor is transmitted to the generator via the hydraulic transmission. Further, the hydraulic pump is constituted of a plurality of sets of pistons and cylinders, and cams which periodically reciprocate the pistons in the cylinders. Document WO 2008/113699 describes an energy conversion device with hydraulic drive and document US.2009/273186 describes a windmill utilizing e Fluide drive pump.

### Citation List

### Patent Literature

PTL 1: EP 2273107
PTL 2: US 2010/0032959 A

### Summary of Invention

### Technical Problem

As described above, the connection method shown in FIG.13A and FIG.13B and the connection method of Patent Literature 1 are well known as a technique to connect the generator of the power generating apparatus of renewable energy type to the grid. However, an expensive frequency converting circuit is required in all of the above connection methods.
The frequency converting circuit is a combination of the AC-DC-AC converter 530 of FIG.13A, the AC-DC-AC link 550 of FIG.13B, and the passive rectifier and the inverter of Patent Literature 1.

The applicants of the present invention are considering adopting a new system of connecting the synchronous generator to the grid without the frequency converting circuit in a power generating apparatus of renewable energy type with the hydraulic transmission formed by the hydraulic pump and the hydraulic motor as described in

### Patent Literature 2.

However, to connect the synchronous generator to the grid without the frequency converting circuit, before connecting the synchronous generator to the grid, it is necessary to synchronize a frequency and a phase of a terminal voltage of the synchronous generator with the grid. An induction generator can be connected to the grid as long as a slip (a ratio of a difference between a synchronous speed and a rotation speed of the generator to the synchronous speed) is within a prescribed range. Unlike the induction generator, the synchronous generator can be connected to the grid when there is a difference in instantaneous value of a voltage between the generator side and the grid side, which causes the voltage frequency on the grid side to fluctuate. Thus, it is necessary to match both of voltage and frequency before connecting the synchronous generator to the grid.

In Patent Literature 1 and Patent Literature 2, it is not described, in what state the of frequency and phase of the terminal voltage of the synchronous generator, the synchronous generator is synchronized with the grid when connecting the synchronous generator of the power generating apparatus of renewable energy type is connected to the grid without the frequency converting circuit.

In such a case that only one synchronous generator is provided, the characteristic of the generator that it is difficult to achieve high efficiency at low load may possibly become an obstacle to improving the efficiency of the power generating apparatus of renewable energy type during low-load operation and may also force the power generating apparatus of renewable energy type to stop operation during failure of the generator.

In this respect, Patent Literature 1 proposes a wind turbine generator having a plurality of synchronous generators which are connected to the grid via the passive rectifier and the inverter. However, there is no detailed description as to what type of control is performed when connecting each of the synchronous generators to the grid. Particularly, the method of connecting each synchronous generator to the grid without the frequency converting circuit is not disclosed or mentioned in Patent Literature 1. Further, in the wind turbine generator of Patent Literature 1, the step-up gear itself is heavy and structurally complicated and a gear is needed to extract the output of the step-up gear to the rotating shaft of each synchronous generator at several times, which leads to increase in weight and cost.

In view of the above issues, an object of the present invention is to provide a power generating apparatus of renewable energy type in which the synchronous generator can be connected to the gird without the frequency converting circuit and which is capable of improving efficiency during low-load operation and of avoiding missing opportunities of power generation due to failure of the generator.

### Solution to Problem

One aspect of the present invention is a power generating apparatus of renewable energy type which generates power from renewable energy according to claim 1.

In the power generating apparatus of renewable energy type, the synchronizer supplies a command value of the displacement of each of the hydraulic motors to the motor controller so that before the synchronous generators are connected to the grid, a frequency and a phase of a terminal voltage of each of the synchronous generators are synchronized with the grid. Therefore, without a frequency converting circuit between each of the synchronous generators and the grid, it is possible to create a condition for the synchronous generator to be connected to the grid by means of the synchronizer.

Further, the displacements of a plurality of hydraulic motors are adjusted independently of each other and thus, it is possible to arbitrarily select a set of the plural sets of the synchronous generator and the hydraulic motor to be used for operation. Therefore, it is also possible to use only certain set(s) of the plural sets of the synchronous generator and the hydraulic motor depending on the needs. For instance, to improve the efficiency of the wind turbine generator as a whole during the low load operation, fewer sets of the synchronous generator and the hydraulic motor may be used, or when there is a failure in one or more sets of the synchronous generator and the hydraulic motor, remaining undamaged sets of the synchronous generator and the hydraulic motor may be used to continue the power generation without missing the opportunities of the power generation.

In the above power generating apparatus of renewable energy type, the motor controller may control the displacement of each of the hydraulic motors so as to maintain the pressurized oil at a target pressure based on a target output value of each of the hydraulic motors, after said each of the synchronous generators is connected to the grid.

When the synchronous generator is connected to the grid, an active cross current acting to match the frequency and the phase of the terminal voltage of the synchronous generator, is generated between the synchronous generator and the grid. Thus, after the synchronous generator is connected to the grid, such a control to positively synchronize the frequency and the phase of the terminal voltage of the synchronous generator with the grid is not necessary. As described above, after the synchronous generator is connected to the grid, the displacement of each of the hydraulic motors is adjusted so as to maintain the pressurized oil at the target pressure based on the target output value of each of the hydraulic motors. Therefore, it is possible to operate the power generating apparatus of renewable energy type in a stable manner.

In the case of synchronizing two or more synchronous generators at the same time, changing the displacement of the hydraulic motor for synchronizing one synchronous generator becomes a disturbance, making it difficult to synchronize the remaining synchronous generators.

In view of this, in the above power generating apparatus of renewable energy type, the number of sets of the synchronous generator and the hydraulic motor may be N where N is an integer not less than two,
the N synchronous generators are connected to the grid sequentially in response to increase of a flow speed of the renewable energy, and
before each of the synchronous generators is connected to the grid, the motor controller may adjust a displacement of each of the hydraulic motors based on the command value from the synchronizer.

The flow speed of the renewable energy, herein, is a wind speed in the case of the power generating apparatus of renewable energy type being a wind turbine generator, and a flow speed of the water in the case of the power generating apparatus of renewable energy type being a tidal generator, an ocean current generator, a river current generator or the like.

As described above, the N synchronous generators are connected to the grid sequentially in response to increase of a flow speed of the renewable energy and the displacement of each of the hydraulic motors is adjusted before each of the synchronous generators is connected to the grid. By this, the synchronized state can be created easily for each of the synchronous generators. The synchronized state is the state where the frequency and phase of the terminal voltage are synchronized with the grid.

In the case where the N synchronous generators are connected to the grid sequentially in response to increase of the flow speed of the renewable energy, after an i-th synchronous generator of the N synchronous generators is connected to the grid, the motor controller increases displacement of an i-th hydraulic motor coupled to the i-th synchronous generator until an output of the i-th synchronous generator reaches a set value which is lower than a rated power of the i-th synchronous generator and higher than a minimum load of the i-th synchronous generator, where i is any of integers from 1 to (N - 1); and then
before a (i+1)-th synchronous generator of the N synchronous generators is connected to the grid, the motor control adjusts a displacement of a (i+1)-th hydraulic motor coupled to the (i+1)-th synchronous generator based on the command value from the synchronizer.

In this manner, after the i-th synchronous generator is connected to the grid, the power of the i-th synchronous generator is increased to the set value greater than the minimum load. After the power of the i-th synchronous generator reaches the set value, connection of the (i+1)-th synchronous generator to the grid is prepared to reduce the number of the generators used during the low load operation. By this, it is possible to improve efficiency of the wind turbine generator as a whole during the low load operation. Further, by setting the set value below the rated power of the synchronous generator, an increase margin of the power of the i-th synchronous generator corresponding to the difference between the rated power and the set value, is secured, and the unstable energy of the pressurized oil caused during the synchronization of the (i+1)-th synchronous generator can be absorbed by controlling the displacement of the i-th hydraulic motor 14ᵢ (by the increase margin of the i-th synchronous generator. Therefore, the (i+1)-th hydraulic motor can be dedicated to synchronizing the (i+1)-th synchronous generator and this facilitates the synchronization of the (i+1)-th synchronous generator.

Further, the above set value may be not less than 50% and less than 100% of the rated power of the i-th synchronous generator.

According to the knowledge of the inventors, in a common synchronous generator, efficiency decline becomes apparent under the low load condition below 50% of the rated power. Thus, by setting the set value not less than 50% of the rated power of the synchronous generator, it is possible to effectively improve the efficiency of the power generating apparatus of renewable energy type as a whole during the low load operation. Further, by setting the set value less than the rated power of the synchronous generator, for the reason mentioned above, the synchronization of the (i+1)-th synchronous generator is facilitated.

Alternatively, the motor controller may, after an i-th synchronous generator of the N synchronous generators is connected to the grid, adjust displacements of first to i-th hydraulic motors independently of each other to maintain outputs of first to i-th synchronous generators at minimum load, where i is any of integers from 1 to (N - 1), and
before a (i+1)-th synchronous generator of the N synchronous generators is connected to the grid, the motor controller may adjust a displacement of a (i+1)-th hydraulic motor coupled to the (i+1)-th synchronous generator based on the command value from the synchronizer.

By this, except an extremely low load operation area where the wind speed is near the cut-in wind speed at which the wind turbine generator starts generating the power, the wind turbine generator starts its operation using all of the N sets of the hydraulic motor and the synchronous generator. Thus, except the extremely low load operation area near the cut-in wind speed, each set of the hydraulic motor and the synchronous generator are handled similarly and thus, a simple operation control can be achieved. Further, unbalanced use among the sets of the hydraulic motor and the synchronous generator is reduced.

In the case where the N synchronous generators are connected to the grid sequentially in response to increase of the flow speed of the renewable energy, the above power generating apparatus of renewable energy type may further include:
a pitch controller which adjusts a pitch angle of the blade; and
a pump controller which adjusts a displacement of the hydraulic pump, and
before a first synchronous generator of the N synchronous generators is connected to the grid, the motor controller may adjust the displacement of a first hydraulic motor coupled to the first synchronous generator based on the command value from the synchronizer in such a state that the pitch angle of the blade is adjusted by the pitch controller to maintain the rotation speed of the rotating shaft at target rotation speed and the displacement of the hydraulic pump may be adjusted by the pump controller to maintain the pressurized oil at a target pressure.

In the power generating apparatus of renewable energy type, the amount of the renewable energy received by the blade changes moment by moment and thus, the rotation speed of the rotating shaft and the pressure of the pressurized oil supplied to the hydraulic motor change as well. This can cause a disturbance when synchronizing the first synchronous generator. Therefore, as described above, the rotation speed of the rotating shaft is maintained at target rotation speed by adjusting the pitch angle of the blade by the pitch controller and the pressurized oil is maintained at a target pressure by adjusting the displacement of the hydraulic pump by the pump controller, thereby stabilizing the rotation speed of the rotating shaft and the pressure of the pressurized oil. This facilitates the synchronization of the first synchronous generator.

Further, in the case where the N synchronous generators are connected to the grid sequentially in response to increase of the flow speed of the renewable energy, an order of connecting the synchronous generators to the grid may be determined based on at least one of an accumulated operating time of each of the sets of the synchronous generator and the hydraulic motor and an opening and closing frequency of each circuit breaker which switches a connection state between each of the synchronous generators and the grid.

By this, the usage of the plural sets of the synchronous generator and the hydraulic motor is equalized and thus, it is possible to avoid extreme deterioration of certain sets of the synchronous generator and the hydraulic motors and to improve reliability of the wind turbine generator as a whole.

Furthermore, in the case where the N synchronous generators are connected to the grid sequentially in response to increase of the flow speed of the renewable energy, the above power generating apparatus of renewable energy type may further include:
a pump controller which adjusts a displacement of the hydraulic pump, and
after an i-th synchronous generator of the N synchronous generators is connected to the grid, the pump controller may adjust the displacement of the hydraulic pump and the motor controller adjusts the displacement of an i-th hydraulic motor coupled to the i-th synchronous generator so as to gradually increase an output of the i-th synchronous generator, where i is any of integers from 1 to (N - 1).

In this manner, after the i-th synchronous generator is connected to the grid, the output of the i-th synchronous generator is gradually increased. Therefore, it is possible to increase the power of the i-th synchronous generator without losing the stability of the rotation speed of the rotating shaft and the pressure of the pressurized oil supplied to the hydraulic motor.

Further, in the case where the N synchronous generators are connected to the grid sequentially in response to increase of the flow speed of the renewable energy, during failure of M of the N synchronous generators, the power generating apparatus of renewable energy type may generate power not higher than P_{rated} x (N - M)/N, where M is an integer of 1 to (N - 1) and P_{rated} is a rated power of the power generating apparatus of renewable energy type.

By this, even when one or more of the synchronous generators is broken, the wind turbine generator is able to continue a partial load operation, hence avoiding missing the opportunities of power generation.

In the above power generating apparatus of renewable energy type, when a flow speed of the renewable energy falls below a cut-in speed at which the power generating apparatus of renewable energy type starts generating the power, all of the synchronous generators having been connected to the grid may be disconnected so as to stop power generation of the power generating apparatus of renewable energy type.

Further, when all of the synchronous generators are disconnected from the grid, at least one of the synchronous generators may generate power to be supplied to an auxiliary device of the power generating apparatus of renewable energy type.

In the above power generating apparatus of renewable energy type, each of the hydraulic motors may include:
a plurality of working chambers each surrounded by a cylinder and a piston;
a plurality of high-pressure valves for supplying the pressurized oil to each of the working chambers;
a plurality of low-pressure valves for discharging the pressurized oil from each of the working chambers; and
a casing in which the working chambers, the high-pressure valves and the low-pressure valves are arranged, and
the power generating apparatus of renewable energy type may further include a starting valve which is provided outside the casing for each of the hydraulic motors, and
when activating each of the hydraulic motors, the motor controller may adjust a number of the working chambers where the pressurized oil is supplied and discharged, by controlling the opening and closing of the starting valve and the low-pressure valves to accelerate the hydraulic motor to a target valve-switch rotation speed, and the motor controller may adjust the number of the working chambers where the pressurized oil is supplied and discharged, by controlling the opening and closing of the high-pressure valves and the low-pressure valves to further accelerate the hydraulic motor above the target valve-switch rotation speed.

As the hydraulic motor having the working chambers, the high-pressure valves and the low-pressure valves, often used is a compact high-pressure valve which is design to open and close or to help the opening and closing, using the pressure difference between each of the working chambers an oil line connecting the hydraulic pump and the hydraulic motor. This type of high-pressure valve can only be opened and closed by the above pressure difference generated by a reciprocating motion of the piston when there is sufficient inertia generated in the rotating shaft of the hydraulic motor. As described above, the starting valve is provided separately from the high-pressure valve outside the casing, and the starting valve and the low-pressure valves are used until the hydraulic motor is accelerated to the target valve-switch rotation speed and the high-pressure valves and the low-pressure valves housed in the casing are used when the hydraulic motor is further accelerated above the target valve-switch rotation speed. By this, it is possible to firmly activate the hydraulic motor.

The above power generating apparatus of renewable energy type may be a wind turbine generator which generates power from wind in a form of the renewable energy.

Another aspect of the present invention is a method of operating a power generating apparatus of renewable energy type according to claim 15.

According to the above method of operating the power generating apparatus of renewable energy type, the displacement or the hydraulic motor is adjusted based on the command value from the synchronizer so that so that before the synchronous generators are connected to the grid, a frequency and a phase of a terminal voltage of each of the synchronous generators are synchronized with the grid. Therefore, without a frequency converting circuit between each of the synchronous generators and the grid, it is possible to create a condition for the synchronous generator to be connected to the grid by means of the synchronizer.

Further, the displacements of a plurality of hydraulic motors are adjusted independently of each other and thus, it is possible to arbitrarily select a set of the plural sets of the synchronous generator and the hydraulic motor to be used for operation. Therefore, it is also possible to use only some sets of the plural sets of the synchronous generator and the hydraulic motor depending on the needs. For instance, to improve the efficiency of the wind turbine generator as a whole during the low load operation, fewer sets of the synchronous generator and the hydraulic motor may be used, or when there is a failure in one or more sets of the synchronous generator and the hydraulic motor, remaining undamaged sets of the synchronous generator and the hydraulic motor may be used to continue the power generation without missing the opportunities of the power generation.

### Advantageous Effects of Invention

According to the present invention, by adjusting the displacement of each of the hydraulic motor based on the command value from the synchronizer, it is possible it is possible to create a condition for the synchronous generator to be connected to the grid without using the frequency converting circuit. Further, the displacements of a plurality of hydraulic motors are adjusted independently of each other and thus, it is possible to arbitrarily select certain set(s) of the plural sets of the synchronous generator and the hydraulic motor to be used for operation. Therefore, it is also possible to use only certain set(s) of the plural sets of the synchronous generator and the hydraulic motor depending on the needs.

### Brief Description of Drawings

[fig.1]FIG.1 shows an example of an overall structure of a wind turbine generator.
[fig.2]FIG.2 shows a structure of a hydraulic transmission and a transmission controller of the wind turbine generator.
[fig.3]FIG.3 shows a structure of the hydraulic transmission.
[fig.4]FIG.4 shows an example of a detailed structure of a hydraulic pump.
[fig.5]FIG.5 shows an example of a detailed structure of a hydraulic pump.
[fig.6]FIG.6 shows an example of a structure around a synchronous generator.
[fig.7]FIG.7 is a graph showing a temporal change of each parameter before and after connecting the synchronous generator to the grid.
[fig.8]FIG.8 is a diagram used to explain an example of a process of connecting two synchronous generators to the grid.
[fig.9]FIG.9 is a diagram used to explain another example of a process of connecting two synchronous generators to the grid.
[fig.10]FIG.10 shows a signal flow of determining a displacement of the hydraulic pump in the transmission controller.
[fig.11]FIG.11 is a graph showing a maximum Cp curve with a rotation speed of a rotor, Wᵣ on a horizontal axis and rotor torque T on a vertical axis.
[fig.12]FIG.12 shows a signal flow of determining a displacement of the hydraulic motor in the transmission controller.
[fig.13A]FIG.13A shows an example of a conventional wind turbine generator.
[fig.13B]FIG.13B shows an example of a conventional wind turbine generator.

### Description of Embodiments

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention. While the present invention is described below with reference to exemplary embodiments, it is obvious to those skilled in the art that various changes may be made without departing from the scope of the invention.

In the following embodiments, a wind turbine generator is described as an example of the power generating apparatus of renewable energy type. However, the present invention is not limited to this example and can be applied to various types of power generating apparatuses of renewable energy type such as a tidal generator, an ocean current generator and a river current generator.

### (STRUCTURE OF WIND TURBINE GENERAOTR)

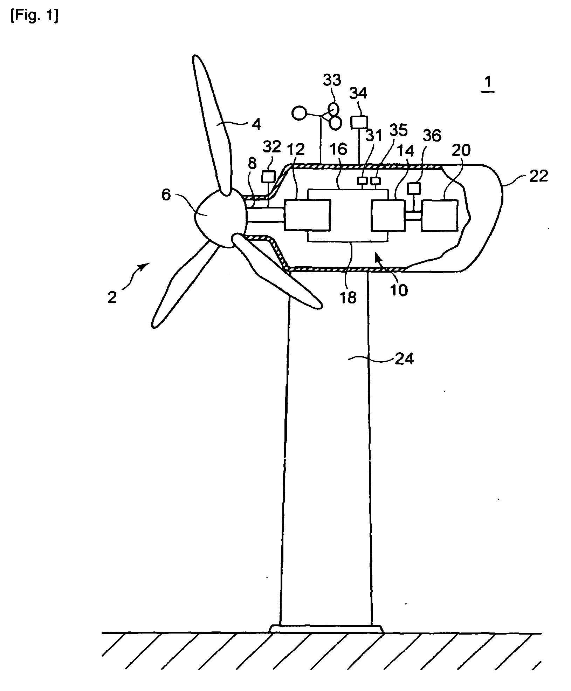

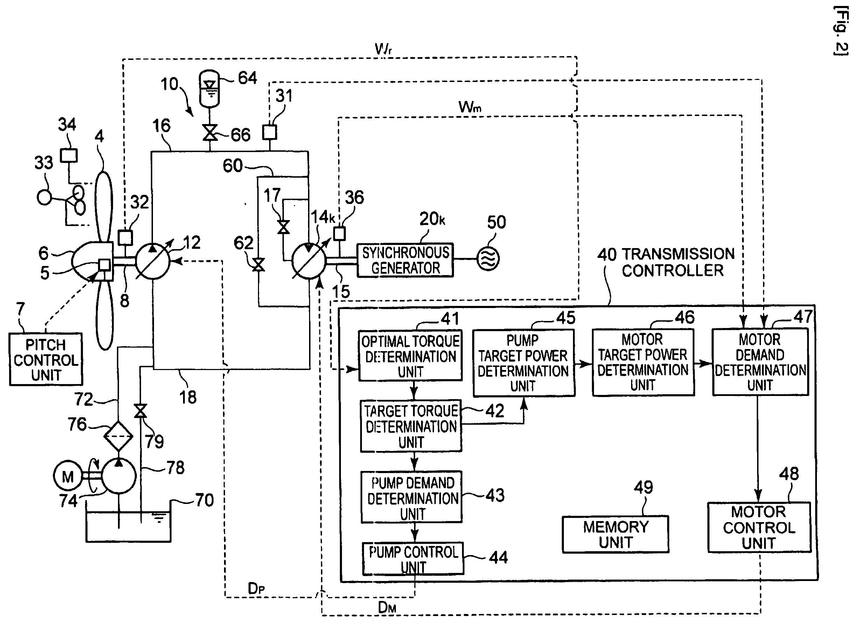

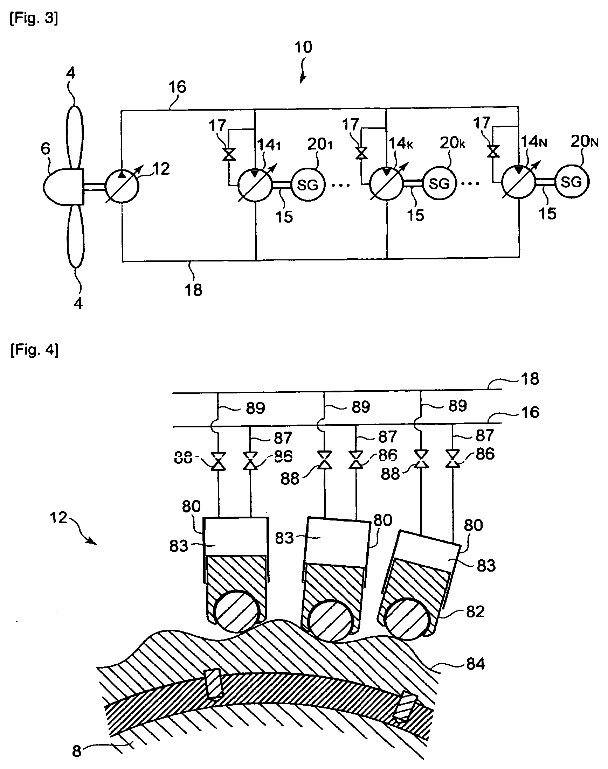

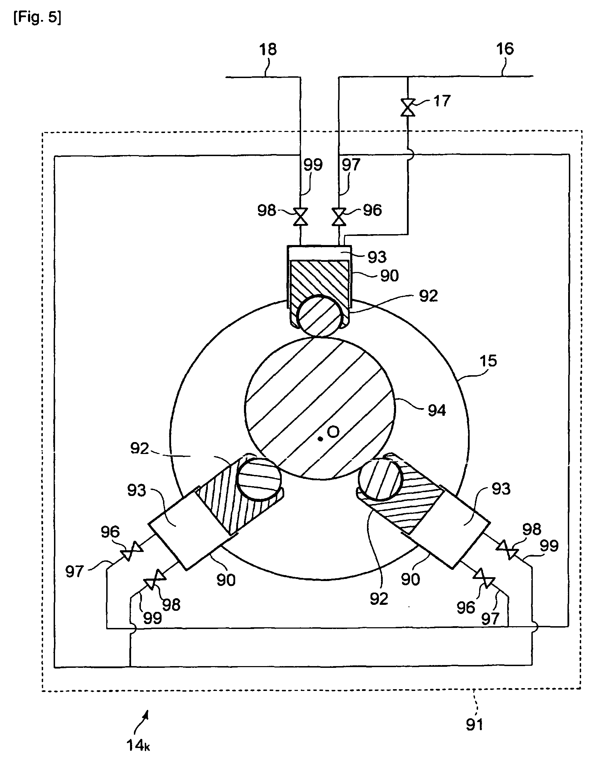

FIG.1 is a schematic view showing an example structure of a wind turbine generator. FIG.2 shows a structure of a hydraulic transmission and a transmission controller of the wind turbine generator. FIG.3 shows a structure of the hydraulic transmission. FIG.4 shows an example of a detailed structure of a hydraulic pump. FIG.5 shows an example of a detailed structure of a hydraulic motor.

As illustrated in FIG.1, the wind turbine generator 1 mainly includes a rotor 2 rotated by the wind, a hydraulic transmission 10 for increasing rotation speed of the rotor 2, a synchronous generator 20 connected to a grid, a transmission controller 40 (See FIG.2) for controlling the hydraulic transmission 10 and a variety of sensors including a pressure sensor 31 and rotation speed sensors 32 and 36.

The hydraulic transmission 10 and the synchronous generator 20 may be housed in a nacelle 22 or a tower 24 supporting the nacelle 22. FIG.1 shows an on-shore wind turbine generator having a tower 24 installed upright on the ground. However, this is not limitative and the wind turbine generator 1 may be installed in any place including offshore.

The rotor 2 is configured such that a rotating shaft 8 is connected to a hub 6 having blades 4. Specifically, three blades 4 extend radially from the hub 6 and each of the blades 4 is mounted on the hub 6 connected to the rotating shaft 8. This allows the power of the wind acting on the blades 4 to rotate the entire rotor 2, and the rotation of the rotor 2 is inputted to the hydraulic transmission 10 via the rotating shaft 8. An actuator 5 is attached to the blade 4 (see FIG.2). The actuator 5 operates under the control of a pitch control unit 7 to change the pitch angle of the blade 4.

As illustrated in FIG.2 and FIG.3, the hydraulic transmission 10 includes a variable-displacement hydraulic pump 12 which is driven by the rotating shaft 8, a variable-displacement hydraulic motor 14ₖ whose output shaft 15 is connected to the synchronous generator 20ₖ (k is any integer in the range of 1 to N), and a high pressure oil line 16 and a low pressure oil line 18 which are arranged between the hydraulic pump 12 and the hydraulic motor 14ₖ. In the wind turbine generator 1, N sets of the hydraulic motor 14ₖ and the synchronous generator 20ₖ are provided (N is an integer not smaller than 2).

The high pressure oil line 16 connects an outlet of the hydraulic pump 12 to an inlet of each hydraulic motor 14ₖ. The low pressure oil line 18 connects an inlet of the hydraulic pump 12 to an outlet of each hydraulic motor 14ₖ. N hydraulic motors 14ₖ are connected to the high pressure oil line 16 and the low pressure oil line 18 in parallel to each other as shown in FIG.3. The pressurized oil (high pressure oil) generated in hydraulic pump 12 flows into the hydraulic motor 14ₖ via the high pressure oil line 16. The pressurized oil (low pressurized oil) having worked in the hydraulic motor 14ₖ flows into the hydraulic pump 12 via the low pressure oil line 18 and then the pressure thereof is raised by the hydraulic pump 12 and finally the pressurized oil flows into the hydraulic motor 14ₖ.

As described below, the hydraulic pump 12 and the hydraulic motor 14ₖ may have specific structures shown in FIG.4 and FIG.5.

As shown in FIG.4, the hydraulic pump 12 may include a plurality of working chambers 83 each of which is formed by a cylinder 80 and a piston 82, a ring cam 84 having a cam profile which is in engagement with the piston 82 and a high pressure valve 86 and a low pressure valve 88 which are provided for each of the working chambers 83. The high pressure valve 86 is arranged in a high pressure communication path 87 between the high pressure oil line 16 and each of the working chambers 83. The low pressure valve 88 is arranged in a low pressure communication path 89 between the low pressure oil line 18 and each of the working chambers 83.

In an operation of the hydraulic pump 12, the ring cam 84 rotates with the rotating shaft 8 and the pistons 82 is cyclically moved upward and downward in accordance with the cam profile to repeat a pump cycle of the pistons 82 starting from the bottom dead center and reaching the top dead center and an intake cycle of the pistons starting from the top dead center and reaching the bottom dead center. Thus, each working chamber 83 has a volume defined by the piston 82 and an interior surface of the cylinder 80 that varies cyclically.

The hydraulic pump 12 can select the operation mode of each working chamber 83 from an active state and an idling state by opening and closing of the high pressure valve 86 and the low pressure valve 88. When the active state is selected for a working chamber 83, the high pressure valve 86 is closed and the low pressure valve 88 is opened during the intake cycle so that the operating oil flows into that working chamber 83, whereas the high pressure valve 86 is opened and the low pressure valve 88 is closed during the pump cycle so that the pressurized oil is displaced to the high pressure oil line 16 from that working chamber 83. In contrast to this, when the idling state is selected for a working chamber 83, the high pressure valve 86 is kept closed and the low pressure valve 88 is kept open during both the intake and pump cycles so that the operating oil flows back and forth between the working chamber 83 and the low pressure oil line 18, i.e. there is no displacement of the pressurized oil to the high pressure oil line 16. Accordingly, the net displacement of the hydraulic pump 12 can be adjusted by varying a ratio of the number of the working chambers 83 in the active state with respect to the total number of the working chambers 83. The control of the net displacement of the hydraulic pump 12 is performed by the transmission controller 40. The transmission controller 40 is described later in details.

As illustrated in FIG.5, the hydraulic motor 14ₖ may include a plurality of hydraulic chambers 93 formed between cylinders 90 and pistons 92, an eccentric cam 94 having a cam profile which engages with the pistons 92, and a high pressure valve 96 and a low pressure valve 98 that are provided for each of the hydraulic chambers 93. The high pressure valve 96 is arranged in a high pressure communication path 97 between the high pressure oil line 16 and each of the oil chambers 93, whereas the low pressure valve 98 is arranged in a low pressure communication path 99 between the low pressure oil line 18 and each of the oil chambers 93.

In an operation of the hydraulic motor 14ₖ, the pistons 92 are periodically moved upward and downward to repeat a motor cycle of the pistons 92 starting from the top dead center and reaching the bottom dead center and a discharge cycle of the pistons starting from the bottom dead center and reaching the top dead center. In the operation of the hydraulic motor 14ₖ, the volume of each working chamber 93 defined by the piston 92 and an interior surface of the cylinder 90 varies cyclically.

The hydraulic motor 14ₖ can select the operation mode of each working chamber 93 from an active state and an idling state by opening and closing of the high pressure valve 96 and the low pressure valve 98. When the active state is selected for a working chamber 93, the high pressure valve 96 is opened and the low pressure valve 98 is closed during the motor cycle so that the operating oil flows into the working chamber 93 from the high pressure oil line 16, whereas the high pressure valve 96 is closed and the low pressure valve 98 is opened during the discharge cycle so that the pressurized oil is displaced to the low pressure oil line 18 from that working chamber 93. In contrast to this, when the idling state is selected for a working chamber 93, the high pressure valve 96 is kept closed and the low pressure valve 98 is kept open during both the motor and pump cycles so that the operating oil flows back and forth between the working chamber 93 and the low pressure oil line 18, i.e. there is no feeding of the pressurized oil form the high pressure oil line 16 to the working chamber 93. Like the hydraulic pump 12, the hydraulic motor 14ₖ can adjust its net displacement by varying a ratio of the number of the working chambers 93 in an active state with respect to the total number of the working chambers 93. The control of the net displacement of the hydraulic motor 14ₖ is performed by the transmission controller 40 described later in detail.

Further, the working chamber 93, the eccentric cam 94, the high pressure valve 96 and the low pressure valve 98 are housed in the casing 91. Outside the casing 91, a starting valve 17 is provided on a flow path between the high pressure oil line 16 and the working chamber 93. The starting valve 17 is used with the low pressure valve 98 so that the hydraulic motor 14 can accelerate to a set rotation speed during starting of the hydraulic motor 14ₖ. The starting valve 17 may be provided for each of the working chambers 93 or for some of the working chambers 93.

FIG.2 shows an accumulator 64 connected to the high pressure oil line 16. The accumulator 64 can absorb the pressure fluctuation of the operating oil in the high pressure oil line 16 caused by a difference between energy generated by the hydraulic motor 12 and energy consumed in all of the hydraulic motors 14ₖ. Thus, the pressure Pₛ is stabilized by the accumulator 64 and it is made easy to control the hydraulic motor 14ₖ during the synchronization of the synchronous generator 20ₖ with the grid.

Further, a solenoid valve 66 may be provided between the accumulator 64 and the high pressure oil line 16. By opening and closing of the solenoid valve 66, the accumulator 64 becomes in fluid communication with or becomes disconnected from the high pressure oil line 16. In such a case that the solenoid valve 66 is provided, the pressure Pₛ in the high pressure oil line 16 may be stabilized by means of the accumulator 64 by opening the solenoid valve when synchronizing the synchronous generator 20ₖ.

A bypass line 60 is arranged between the high pressure oil line 16 and the low pressure oil line 18 to bypass all of the hydraulic motors 14ₖ and a relief valve 62 is arranged in the bypass line 60 to maintain hydraulic pressure of the high pressure oil line 16 not more than a prescribed pressure. By this, the relief valve 62 automatically opens when the pressure in the high pressure oil line 16 reaches the prescribed pressure of the relief valve 62, to allow the high pressure oil to escape to the low pressure oil line 18 via the bypass line 60.

Further, the hydraulic transmission 10 has an oil tank 70, a supplementary line 72, a boost pump 74, an oil filter 76, a return line 78 and a low pressure relief valve 79.

The oil tank 70 stores supplementary operating oil. The supplementary line 72 connects the oil tank 70 to the low pressure oil line 18. The boost pump 74 is arranged in the supplementary line 72 so as to replenish the low pressure oil line 18 with the supplementary operating oil from the oil tank 70.

The return line 78 is installed between the oil tank 70 and the low pressure oil line 18. The low pressure relief valve 79 is arranged in the return line 78 and the pressure in the low pressure oil line 18 is maintained at the prescribed pressure or below. By this, even with the boost pump 74 supplying the supplementary operating oil to the low pressure oil line 18, the low pressure relief valve 79 can automatically open to release the operating oil to the oil tank 70 via the return line 78 once the pressure in the low pressure oil line 18 reaches the prescribed pressure of the low pressure relief valve 79.

As illustrated in FIG.2, the wind turbine generator 1 has a variety of sensors including a pressure sensor 31 and rotation speed sensors 32 and 34. The rotation speed sensors 32 and 34 measure the rotation speed of the rotating shaft 8 and the rotation speed of the output shaft 15 of the hydraulic motor 14ₖ, respectively. The pressure sensor 31 measures the pressure in the high pressure oil line 16. It is also possible to provide an anemometer 33 installed outside the nacelle 22 for measuring the wind speed and a temperature sensor 34 for measuring ambient temperature of the wind turbine generator 1. The measurement results of such sensors may be sent to the transmission controller 40 and used for controlling the hydraulic pump 12 and the hydraulic motor 14.

The synchronous generator 20ₖ is coupled to the output shaft 15 of the hydraulic motor 14ₖ. The synchronous generator 20ₖ is connected to the grid 50 without a frequency converting circuit such as frequency converting circuits 530 and 550 of FIG.13A and FIG.13B.

The wind turbine generator, in general, has significant power fluctuation. Thus, connecting many wind turbine generators to the grid can lead to frequency fluctuation of the grid. However, by operating the wind turbine generators at variable speed, the power is smoothed, thereby mitigating the effect on the grid. Therefore, in the wind turbine generator 1, the hydraulic transmission 10 is controlled by the transmission controller 40 (normal control mode) to achieve the variable speed operation of the wind turbine generator 1. The normal control mode of the transmission controller 40 is described later in details.

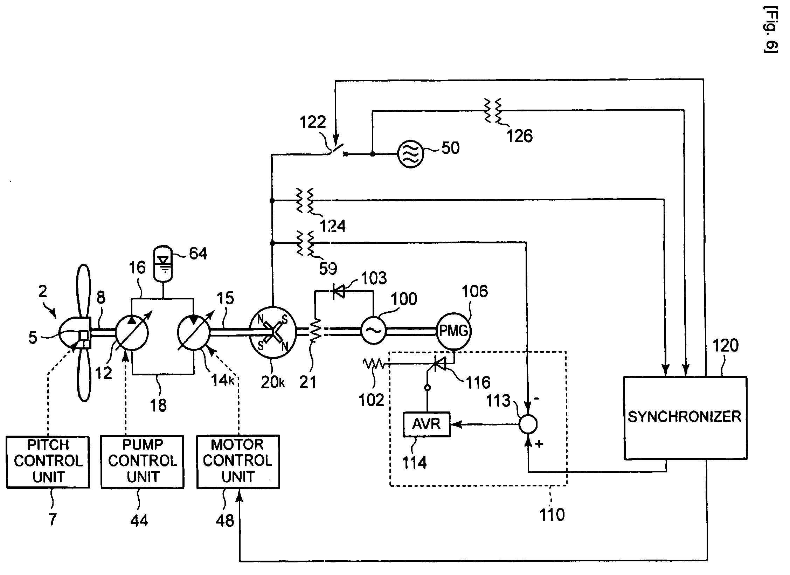

FIG.6 shows a example of a structure around the synchronous generator 20ₖ. Further, As shown in FIG.6, the synchronous generator 20ₖ includes a field winding 21 which rotates with the hydraulic motor 14ₖ and the output shaft 15, and a stationary armature (not shown) which is connected to the grid via a circuit breaker 122. To the filed winding 21, DC field current is supplied from an exciter 100.

An exciter controller 110 is provided to control a magnitude of the field current supplied to the field winding 21. A terminal voltage detector 59 (a potential transformer) is provided to detect the terminal voltage of the synchronous generator 20. Based on the detected terminal voltage of the synchronous generator 20, the exciter controller 110 may control the exciter 100 so that the terminal voltage becomes a set value.

As a specific structure of the exciter 100, the exciter 100 may be an AC exciter as illustrated in FIG.6. Specifically, the exciter 100 may be an AC generator formed by a rotating armature (not shown) and a field winding (a stator) 102. In such case, the exciter 100 is an AC exciter directly connected to the output shaft 15 of the hydraulic motor 14ₖ and AC outputted from the rotating armature of the exciter 100 is converted into DC by a rectifier (a rotary rectifier) 103 and then supplied to the field winding 21 of the synchronous generator 20ₖ as the field current. The field winding 21, the armature of the exciter 100 and the rectifier 103 rotate with the output shaft 15 of the hydraulic motor 14ₖ. In this manner, AC from the rotating armature of the AC exciter 100 is rectified by the rectifier (the rotary rectifier) 103 and supplied to the field winding 21 which is a rotator. By this, it is no longer necessary to provide a brush, thereby eliminating the need for brush maintenance (periodic replacement of the brush). As the wind turbine generators are generally installed in a remote area such as in mountains and offshore, the fact that there is no need for the brush maintenance (the periodic replacement of the brush) significantly contributes to reducing its running cost.

In the example shown in FIG.6, the exciter controller 110 changes the magnitude of the field current supplied to the field winding 102 of the exciter so as to adjust the magnitude of the field current to the field winding 21 of the synchronous generator 20ₖ.

In such case, the exciter controller 110 may be formed by a comparison circuit 113, an automatic voltage regulator (AVR) 114 and a thyristor 116, as shown in FIG.6. In the comparison circuit 113, the detected value of the terminal voltage of the synchronous generator 20ₖ detected by the terminal voltage detector 59 is compared with the set value inputted from a synchronizer 120 and outputs the difference of the values to the AVR 114. In the AVR 114, based on the difference outputted from the comparison circuit 113, a gate signal is supplied to the thyristor 116. The thyristor 116 is provided between the field winding 102 of the exciter 100 and an auxiliary exciter formed by a permanent magnetic generator (PMG) 106 directly connected to the output shaft 15 of the hydraulic motor 14ₖ. The thyristor 116 uses the PMG (the auxiliary exciter) as power source and excites the field winding (stator field) 102 of the exciter 100.

In this manner, the PMG 106 which is directly connected to the output shaft 15 of the hydraulic motor 14ₖ and attached to a common shaft of the synchronous generator 20ₖ, is used as power source of the thyristor 116 so as to excite the synchronous generator 106 without an external power source even before connecting the synchronous generator 20ₖ to the power grid 50. This is extremely advantageous for the wind turbine generators, which generally have a difficulty in obtaining power from the external power source.

### (CONTROL BEFORE AND AFTER CONNECTING SYNCHRONOUS GENERATOR TO THE GRID)

In the wind turbine generator 1, the synchronizer 120 is used to connect each synchronous generator 20ₖ to the grid 50.

The synchronizer 120 receives the detected terminal voltage of the synchronous generator 20ₖ which is detected by a terminal voltage detector 124 and the detected voltage of the grid 50 which is detected by a grid voltage detector 126. The detected terminal voltage of the synchronous generator 20ₖ and the detected voltage of the grid 50 are used in the synchronizer 120 to synchronize each synchronous generator 20ₖ. When connecting the synchronous generator 20ₖ to the grid 50, the synchronizer 120 supplies a command value of the displacement of the hydraulic motor 14ₖ to the motor control unit 48 so that differences of frequency and terminal voltage between the detected terminal voltage of the synchronous generator 20ₖ detected by the terminal voltage detector 124 and the detected voltage of the grid 50 detected by the grid voltage detector 126 are within a prescribed range. In accordance with the command value from the synchronizer 120, the motor control unit 48 adjusts the displacement of the hydraulic motor 14ₖ, thereby synchronizing the frequency and the phase of terminal voltage of the synchronous generator 20ₖ with the grid 50. Then, the circuit breaker 122 is closed in accordance with a signal from the synchronizer 120, and the synchronous generator 20ₖ is connected to the grid 50.

Before connecting the synchronous generator 20ₖ to the grid 50, the exciter controller 110 performs control so that a difference between the prescribed value inputted from the set value inputted from the synchronizer 120 (the voltage of the grid 50) and the terminal voltage of the synchronous generator 20ₖ is within the prescribed range. More specifically, based on the difference outputted from the comparison circuit 113, the AVR 114 supplies the gate signal to the thyristor 116. By this, the magnitude of the field current supplied to the field winding 21 of the synchronous generator 20ₖ is adjusted.

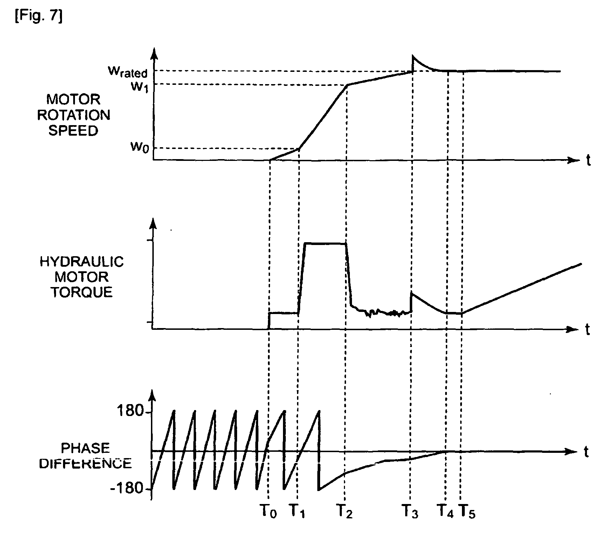

FIG.7 is a graph showing a temporal change of each parameter before and after connecting the synchronous generator 20ₖ to the grid.

Before time T₀, the hydraulic motor 14ₖ and the synchronous generator 20ₖ are stopped.

The hydraulic motor 14ₖ begins its activation at time T₀. In a range of t=T₀ to T₁, the starting valve 17 and the low pressure valve 98 are open and closed based on the rotation speed measured by a rotation speed meter 36 under the control of the motor control unit 48 to supply and discharge the pressurized oil to the working chamber 93 repeatedly. By repeating supply and discharge of the pressurized oil to the working chamber 93, the rotation speed of the hydraulic motor 14ₖ is increased to a set rotation speed w₀. Once the rotation speed of the hydraulic motor 14ₖ reaches w₀ at t=T1, it is switched to acceleration of the hydraulic motor 14ₖ using the high pressure valve 96 and the low pressure valve 98. Next, in a range of t=T1 to T2, the high pressure valve 96 and the low pressure valve 98 are open and closed based on the rotation speed measured by the rotation speed meter 36 under the control of the motor control unit 48 to supply and discharge the pressurized oil to the working chamber 93 repeatedly. By repeating supply and discharge of the pressurized oil to the working chamber 93, the rotation speed of the hydraulic motor 14ₖ is increased to a set rotation speed w₁ which is a short of the rated rotation speed w_{rated}. In this process, to rapidly raise the rotation speed of the hydraulic motor 14ₖ to the rotation speed w₁, all of the working chambers 93 are put in the active state to maximize the displacement of the hydraulic motor 14ₖ.

Subsequently, at time T2, controlling of the hydraulic motor 14ₖ begins so as to synchronize the frequency of the terminal voltage of the synchronous generator 20ₖ with the grid 50. More specifically, in accordance with the signal from the synchronizer 120, the motor control unit 48 adjusts the displacement of the hydraulic motor 14ₖ (the number of the working chambers 93 that are in the active state) to bring the rotation speed of the hydraulic motor 14ₖ closer to the rated rotation speed w_{rated}. The rated rotation speed w_{rated} herein refers to the rotation speed of the hydraulic motor 14ₖ at which the frequency of the terminal voltage of the synchronous generator 20ₖ is synchronized with the grid 50. Before starting this control, an excitation system of the synchronous generator 20ₖ is activated.

At time T3, controlling of the hydraulic motor 14ₖ is switched to synchronize the phase of the terminal voltage of the synchronous generator 20ₖ with the grid 50. More specifically, in accordance with the signal from the synchronizer 120, the motor control unit 48 adjusts the displacement of the hydraulic motor 14ₖ (the number of the working chambers 93 that are in the active state) so that the phase difference between the synchronous generator side 20ₖ and the grid side 50 is within the prescribed range. Once the phase difference between the synchronous generator side 20ₖ and the grid side 50 falls within the prescribed range at time T4 and then other condition is met, the circuit breaker 122 is closed in accordance with the signal from the synchronizer 120 to connect the synchronous generator 20ₖ to the grid 50. The other condition mentioned above is that the difference between the terminal voltage of the synchronous generator 20ₖ and the voltage of the grid is within the prescribed range. The other condition is met by controlling the field current flowing in the field winding 21 by the exciter controller 110.

Subsequently, the torque of the hydraulic motor 14ₖ is gradually increased to raise the power of the synchronous generator 20ₖ.

In the case of synchronizing two or more synchronous generators 20ₖ at the same time, changing the displacement of the hydraulic motor for synchronizing one synchronous generator becomes a disturbance, making it difficult to synchronize the remaining synchronous generators.

In view of this, in the embodiment, the N synchronous generators 20ₖ are connected to the grid 50 sequentially in response to increase of the wind speed so as to connect the synchronous generators 20ₖ to the grid 50 at different timings. By this, the synchronized state can be created easily for each of the synchronous generators 20ₖ. The synchronized state is the state where the frequency and phase of the terminal voltage are synchronized with the grid 50.

Hereinafter, an i-th synchronized generator 20ᵢ is the i-th one of the synchronous generators 20ₖ to be connected to the grid.

In the case of connecting the synchronous generators 20ᵢ to the grid 50 in a sequential manner, an order of connecting each synchronous generator 20ᵢ to the grid 50 may be determined based on an accumulated operating time of each set of the synchronous generator 20ᵢ and the hydraulic motor 14ᵢ, an opening and closing frequency of each circuit breaker 122 which switches a connection state between each synchronous generator 20ᵢ and the grid 50, or the like.

By this, the usage of the plural sets of the synchronous generator 20ᵢ and the hydraulic motor 14ᵢ is equalized and thus, it is possible to avoid extreme deterioration of certain sets of the synchronous generator 20s and the hydraulic motors 14ᵢ and to improve reliability of the wind turbine generator 1 as a whole.

For instance, after the i-th synchronous generator 20ᵢ is connected to the grid 50 (i is any of integers from 1 to (N - 1), the power of the i-th synchronous generator 20ᵢ may be increased to a set value X and then a (i+1)-th synchronous generator 20ᵢ₊₁ may be synchronized. More specifically, after the i-th synchronous generator 20ᵢ is connected to the grid 50, the motor control unit 48 may increase the power of the synchronous generator 20ᵢ to the set value X by increasing the torque of the hydraulic motor 14ᵢ and then, adjusts the displacement of the hydraulic motor 14ᵢ₊₁ based on the command value from the synchronizer 120. Further, the set value X is greater than the minimum load of the synchronous generator 20ᵢ and less than the rated power of the synchronous generator 20ᵢ. For instance, the set value X may be not less than 50% and less than 100% of the rated power of the synchronous generator 20ᵢ.

In this manner, after the i-th synchronous generator 20ᵢ is connected to the grid, the power of the i-th synchronous generator is increased to the set value X which is greater than the minimum load. Once the power of the i-th synchronous generator 20ᵢ reaches the set value X, connection of the (i+1)-th synchronous generator 20ᵢ₊₁ to the grid 50 is prepared to reduce the number of the generators used during the low load operation. By this, it is possible to improve efficiency of the wind turbine generator 1 as a whole during the low load operation. Further, by setting the set value X below the rated power of the synchronous generator 20ᵢ, an increase margin of the power of the i-th synchronous generator 20ᵢ corresponding to the difference between the rated power and the set value X, is secured. The excess energy of the pressurized oil caused during the synchronization of the (i+1)-th synchronous generator 20ᵢ₊₁ can be absorbed by the increase of the displacement of the i-th hydraulic motor 14ᵢ. Therefore, the (i+1)-th hydraulic motor 14ᵢ₊₁ can be dedicated to synchronizing the (i+1)-th synchronous generator 20ᵢ₊₁ and this facilitates the synchronization of the (i+1)-th synchronous generator 20ᵢ₊₁.

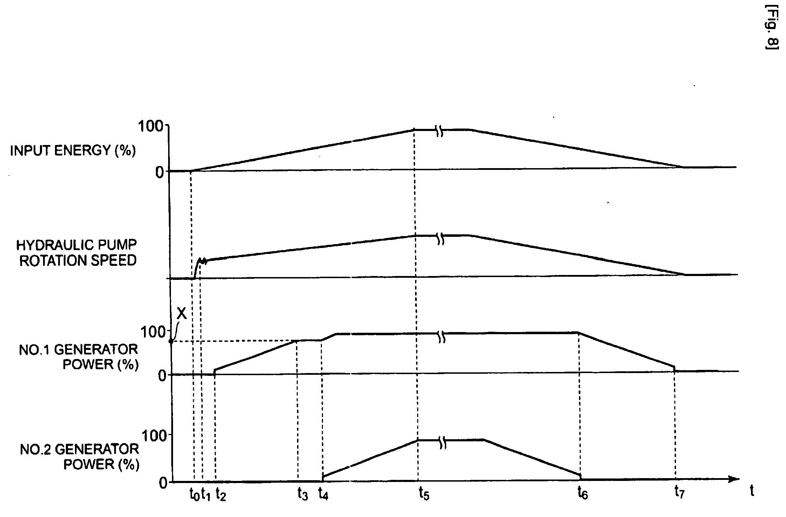

FIG.8 is a diagram used to explain an example of the above process of connecting two synchronous generators 20ₖ to the grid 50.

First, when the wind speed measured by the anemometer 33 exceeds the cut-in wind speed at t=t₀ and an activation condition is established, the actuator 5 changes the pitch angle of the blade 4 toward a fine position under the control of the pitch controller 7 to increase aerodynamic energy inputted to the hydraulic pump 12. In this process, the displacement of the hydraulic pump 12 is reduced to zero by the pump control unit 44. By this, the rotating shaft 8 is accelerated at an angular acceleration corresponding to the aerodynamic torque applied to the hydraulic pump 12.

Once the rotation speed of the rotating shaft 8 reaches a set value at t=t1, the pump control unit 44 increases the displacement of the hydraulic pump 12 to begin supply of the high pressure oil to the high pressure oil line 16 and increase the pressure Pₛ of the high pressure oii measured by the pressure sensor 31. The set value is, for instance, a rotation speed within a range of 40 to 60% of the rated rotation speed. Once the pressure Pₛ of the high pressure oil reaches the set value, the rotation speed of the rotating shaft 8 is maintained at the target rotation speed by adjusting the pitch angle of the blade by the pitch controller 7 and also the pressure Pₛ of the high pressure oil is maintained at the target pressure by adjusting the displacement of the hydraulic pump 12 by the pump control unit 44. The rotation speed of the rotating shaft 8 and the pressure Pₛ of the high pressure oil are stabilized, the first hydraulic motor 14₁ is activated and then the rotation speed of the hydraulic motor 14, is raised toward the rated rotation speed w_{rated}. Further, when accelerating the hydraulic motor 14₁, as described above, the displacement of the hydraulic motor 14₁ may be adjusted using the starting valve 17 and the low pressure valve 98 until the prescribed rotation speed w₀ is reached, and using the high pressure valve 96 and the low pressure valve 98 after the prescribed rotation speed w₀ is reached. Once the prescribed rotation speed of the hydraulic motor 14₁ is reached, the first synchronous generator 20₁ is activated. Then, in accordance with the command value from the synchronizer 120, the motor control unit 48 adjusts the displacement of the hydraulic motor 14₁ so that the frequency difference and the phase difference between the synchronous generator side 20₁ and the grid side 50 fall within the prescribed range. Further, in accordance with the control signal from the synchronizer 120, the exciter controller 110 adjusts the field current flowing in the field winding 21 so that the voltage difference between the synchronous generator 20₁ and the grid side 50 falls within the prescribed range. In this manner, while the frequency difference, the phase difference and the voltage difference between the synchronous generator 20₁ and the grid side 50 are within the prescribed range, the synchronizer 120 supplies the signal for closing the circuit breaker 122 and the synchronous generator 20, is connected to the grid 50 at time t2.

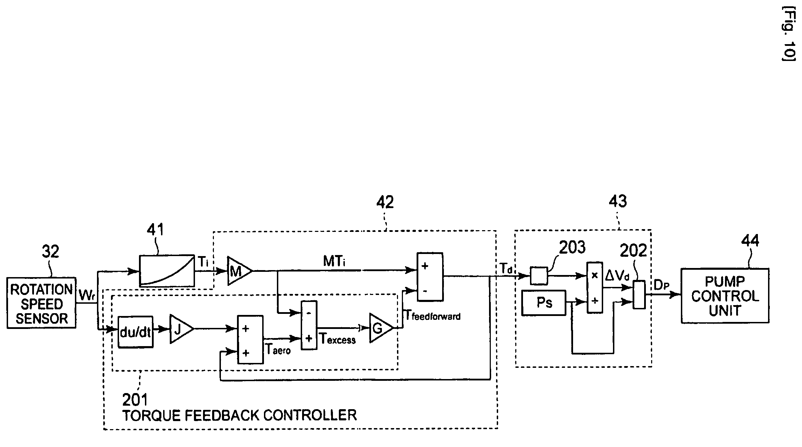

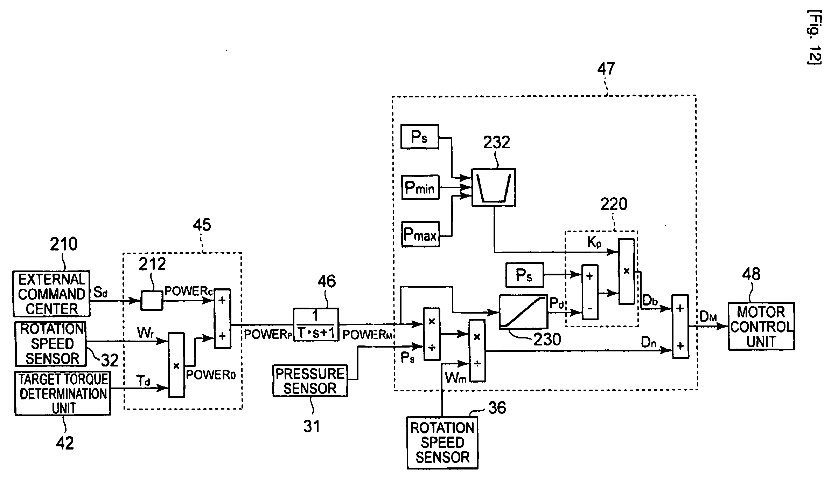

After connecting the synchronous generator 20₁ to the grid, the pitch control of the blade 4, the control of the hydraulic pump 12 and the hydraulic motor 14₁ are switched to a normal control mode which is described later in details. More specifically, the pitch controller 7 fixes the pitch angle of the blade 4 approximately at the fine position. Further, as described later in details in reference to FIG.10, the pump control unit 44 adjusts the displacement of the hydraulic pump 12 so that the torque of the hydraulic pump 12 becomes a value corresponding to the rotation speed of the rotating shaft 8. Further, as described later in details in reference to FIG.12, the motor control unit 48 adjusts the displacement of the hydraulic motor 14₁ so that the pressure Pₛ of the high pressure oil is maintained at the target pressure. The displacements of the hydraulic pump 12 and the hydraulic motor 14, are gradually increased to gradually increase the power of the synchronous generator 20₁.

When the power of the synchronous generator 20₁ reaches the set value X by increasing the displacement of the hydraulic motor 14₁, the second hydraulic motor 14₂ is activated and the rotation speed of the second hydraulic motor 14₂ is raised toward the rated rotation speed w_{rated}. When accelerating the hydraulic motor 14₂, in the same manner as the hydraulic motor 14₁, the displacement of the hydraulic motor 14₂ may be adjusted by using the starting valve 17 and the low pressure valve 98 until the prescribed rotation speed w₀ is reached, and using the high pressure valve 96 and the low pressure valve 98 after the prescribed rotation speed w₀ is reached. Once the prescribed rotation speed of the hydraulic motor 14₂ is reached, the second synchronous generator 20₂ is activated. Then, in accordance with the command value from the synchronizer 120, the motor control unit 48 adjusts the displacement of the hydraulic motor 14₂ so that the frequency difference and the phase difference between the synchronous generator side 20₂ and the grid side 50 fall within the prescribed range. Further, in accordance with the control signal from the synchronizer 120, the exciter controller 110 adjusts the field current flowing in the field winding 21 so that the voltage difference between the synchronous generator 20₂ and the grid side 50 falls within the prescribed range. In this manner, while the frequency difference, the phase difference and the voltage difference between the synchronous generator 20₁ and the grid side 50 are within the prescribed range, the synchronizer 120 supplies the signal for closing the circuit breaker 122 and the synchronous generator 20₂ is connected to the grid 50 at time t4.

After connecting the synchronous generator 20₂ to the grid 50, the control of the hydraulic motor 14₂ is switched to a normal control. More specifically, as described later in details, the motor control unit 48 adjusts the displacement of the hydraulic motor 14₂ so that the pressure Pₛ of the high pressure oil is maintained at the target pressure. And, by increasing the powers of both synchronous generators 20₁ and 20₂, the powers of the synchronous generators 20₁ and 20₂ reach the rated power at time t5. More specifically, at time t5, the rated power of the wind turbine generator 1 as a whole is achieved.

When the wind speed becomes not greater than the rated wind speed, the displacements of the hydraulic motors 14₁ and 14₂ are reduced gradually to lower the powers of the synchronous generators 20₁ and 20₂. Once the powers of the synchronous generators 20₁ and 20₂ reach the minimum load, the synchronous generators 20₁ and 20₂ are disconnected from the grid. In this process, one of the synchronous generators 20 may be disconnected while the power of the other synchronous generator 20 is maintained at the rated power. The order of connecting the synchronous generators 20₁ and 20₂ may be determined based on the accumulated operating time of each set of the synchronous generator 20ᵢ and the hydraulic motor 14ᵢ, an opening and closing frequency of each circuit breaker i22, or the like.

In the example shown in FIG.8, the power of the synchronous generator 20₂ is lowered to the minimum load while the power of the synchronous generator 20₁ is maintained at the rated power, and the circuit breaker 122 is opened at time t6 to disconnect the synchronous generator 20₂ from the grid 50. When the wind speed declines further, the power of the synchronous generator 20₁ is gradually reduced by gradually reducing the displacement of the hydraulic motor 14₁. Once the power of the synchronous generator 20₁ reaches the minimum load, the circuit breaker 122 is opened at t7 to disconnect the synchronous generator 20₁ from the grid 50.

Alternatively, after the i-th synchronous generator 20ᵢ is connected to the grid 50 (i is any of integers from 1 to (N - 1), the (i+1)-th synchronous generator 20ᵢ₊₁ may be synchronized while the powers of the first to i-th synchronous generators 20, to 20ᵢ are maintained at the minimum load. More specifically, after the i-th synchronous generator 20i is connected to the grid 50, while the powers of the synchronous generators 20₁ to 20ᵢ are maintained at the minimum load by adjusting the displacements of the i hydraulic motors 14₁ to 14ᵢ to maintain, the motor control unit 48 may adjust the displacement of the hydraulic motor 14ᵢ₊₁ based on the command value from the synchronizer 120 so as to synchronize the synchronous generator 20ᵢ₊₁.

By this, except an extremely low load operation area where the wind speed is near the cut-in wind speed at which the wind turbine generator 1 starts generating the power, the wind turbine generator 1 starts its operation using all of the N sets of the hydraulic motor 14 and the synchronous generator 20. Thus, except the extremely low load operation area near the cut-in wind speed, each set of the hydraulic motor 14 and the synchronous generator 20 are handled similarly and thus, a simple operation control can be achieved. Further, unbalanced use among the plural sets of the hydraulic motor 14 and the synchronous generator 20 is reduced.

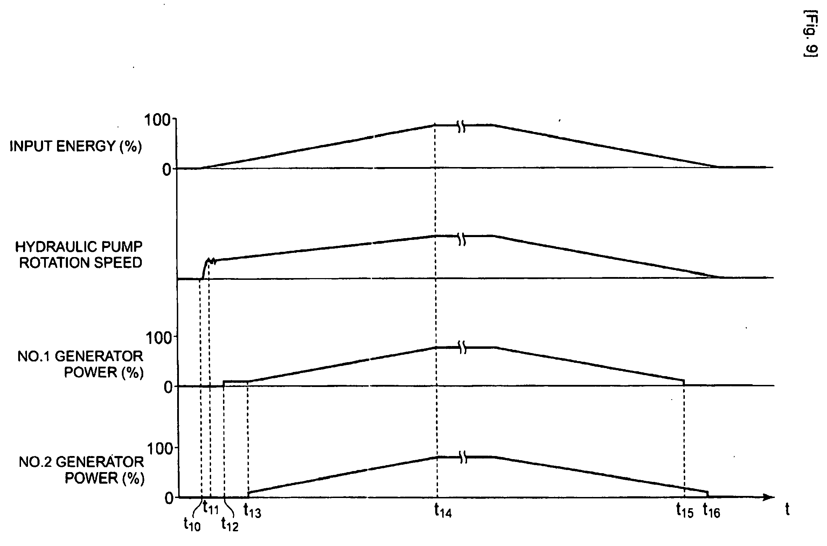

FIG.9 is a diagram used to explain another example of a process of connecting two synchronous generators 20ₖ to the grid 50.

The process of connecting the first synchronous generator 20₁ to the grid 50 (t=t₁₀ to t ₁₂) is the same as the process of t=to to t₂ in FIG.8 and thus, is not explained further.

After the first synchronous generator 20₁ is connected to the grid 50 and then the displacements of the hydraulic pump1 2 and the hydraulic motor 14₁ are stabilized, in such a state that the power of the synchronous generator 20₁ is maintained at the minimum load, the second hydraulic motor 14₂ is activated and the rotation speed of the hydraulic motor 14₂ is increased toward the rated rotation speed w_{rated}. When accelerating the hydraulic motor 14₂, as described above, the displacement of the hydraulic motor 14₂ may be adjusted using the starting valve 17 and the low pressure valve 98 until the prescribed rotation speed w₀ is reached, and using the high pressure valve 96 and the low pressure valve 98 after the prescribed rotation speed w₀ is reached. Once the prescribed rotation speed of the hydraulic motor 14₂ is reached, the second synchronous generator 20₂ is activated. Then, in accordance with the command value from the synchronizer 120, the motor control unit 48 adjusts the displacement of the hydraulic motor 14₂ so that the frequency difference and the phase difference between the synchronous generator side 20₂ and the grid side 50 fall within the prescribed range. Further, in accordance with the control signal from the synchronizer 120, the exciter controller 110 adjusts the field current flowing in the field winding 21 so that the voltage difference between the synchronous generator 20₂ and the grid side 50 falls within the prescribed range. In this manner, while the frequency difference, the phase difference and the voltage difference between the synchronous generator 20, and the grid side 50 are within the prescribed range, the synchronizer 120 supplies the signal for closing the circuit breaker 122 and the synchronous generator 20₂ is connected to the grid 50 at time t13.

Subsequently, by increasing the powers of both synchronous generators 20₁ and 20₂ at the same load, the powers of the synchronous generators 20₁ and 20₂ reach the rated power at time t14. More specifically, at time t14, the rated power of the wind turbine generator 1 as a whole is achieved.

When the wind speed becomes not greater than the rated wind speed, the displacements of the hydraulic motors 14₁ and 14₂ are reduced gradually to lower the powers of the synchronous generators 20₁ and 20₂. Once the powers of the synchronous generators 20₁ and 20₂ reach the minimum load, the synchronous generators 20₁ and 20₂ are disconnected from the grid 50. In this process, the powers of the synchronous generators 20₁ and 20₂ may be reduced toward the minimum load at approximately the same rate and simultaneously.

In the example shown in FIG.9, the displacements of the hydraulic motors 14₁ and 14₂ are reduced gradually at approximately the same rate to reduce the powers of the synchronous generators 20₁ and 20₂. Then, at time t₁₅, the synchronous generator 20, whose power has been lowered to the minimum load first, is disconnected. Subsequently, at time t 16, the synchronous generator 20₂ whose power has been lowered to the minimum load later than the synchronous generator 20₁, is disconnected.

In the case of connecting the synchronous generators 20ᵢ sequentially according to the process described in FIG.8 and FIG.9, when the wind speed is below the cut-in wind speed longer than a prescribed period of time, all of the synchronous generators 20 connected to the grid 50 may be disconnected from the grid 50 so as to stop the power generation by the wind turbine generator 1.

In such a case that the rated power of the wind turbine generator 1 is set to Prated, during failure of M of the N synchronous generators 20, the wind turbine generator 1 may generate power not higher than P_{rated}x (N - M)/N, where M is an integer of 1 to (N - 1). By this, even when one or more of the synchronous generators 20 is broken, the wind turbine generator 1 is able to continue a partial load operation, hence avoiding missing opportunities of power generation. The failure of the synchronous generator 20 may be detected by a monitoring unit such as the terminal voltage detector 59. When the failure of the synchronous generator 20 is detected, the motor control unit 48 adjusts the displacement of the hydraulic motor 14 connected to the broken generator 20 to zero to stop the hydraulic motor 14, and the remaining synchronous generators 20 may continues its operation while maintaining connection with the grid 50.

Even in the case where all of the synchronous generators 20 are disconnected from the grid 50, at least one synchronous generator 20 may be used to generate power to supply power to auxiliary machines of the wind turbine generator 1

### (NORMAL OPERATION MODE OF TRAMISSION CONTROLLER)

During the operation of the wind turbine generator 1 except before and after connection of the synchronous generator 20k to the grid 50, the wind turbine generator 1 having the above structure controls the hydraulic transmission 10 in a normal control mode which is described below.

As shown in FIG.2, the transmission controller 40 includes an optimal torque determination unit 41, a target torque determination unit 42, a pump demand determination unit 43, a pump control unit 44, a pump target power determination unit 45, a motor target power determination unit 46, a motor demand determination unit 47, a motor control unit 48 and a memory unit 49.

In the normal control mode, the transmission controller 40 adjust the displacement of the hydraulic pump 12 using the pump control unit44 so that the torque of the hydraulic pump 12 reaches a value corresponding to the rotation speed of the rotating shaft 8, and also adjust the displacement of the hydraulic motor 14ₖ using the motor control unit 48 so as to maintain the pressure Pₛ of the high pressure oil line at the target pressure based on the target output power POWER_{M} of the hydraulic motor 14ₖ. This enables a variable speed operation without using the frequency converting circuit, in which the rotation speed of the rotating shaft 8 is variable with respect to the wind speed, and also improves output smoothing and power generation efficiency. Further, the pressure Pₛ of the high pressure oil line is maintained at the target pressure by adjusting the displacement of the hydraulic motor 14ₖ and thus, it is possible to control the operation of the wind turbine generator 1 in a stable manner.

Hereinafter, operations of each unit of the transmission controller 40 in the normal control mode are explained. The functions of the transmission controller 40 are broadly divided into controlling of the hydraulic pump 12 and controlling of the hydraulic motor 14ₖ. First, the controlling of the hydraulic pump 12 to adjust displacement thereof is described. Secondly, the controlling of the hydraulic motor 14ₖ to adjust displacement thereof is described.

FIG. 10 shows a signal flow of determining the displacement of the hydraulic pump 12 by the transmission controller 40. As shown in the drawing, the optimal torque determination unit 41 receives the rotation speed Wᵣ of the rotating shaft 8 detected by the rotation speed sensor 32 and determines an optimal torque Tᵢ of the hydraulic pump 12 from the rotation speed Wᵣ. For instance, the optimal torque determination unit 41 reads out from the memory unit 49 (see FIG.2), Wᵣ - Tᵢ function (a function of the rotation speed Wᵣ and the optimal torque Tᵢ) which is set in advance and then obtains the optimal torque Tᵢ which corresponds to the rotation speed Wᵣ from the Wᵣ - Tᵢ function.

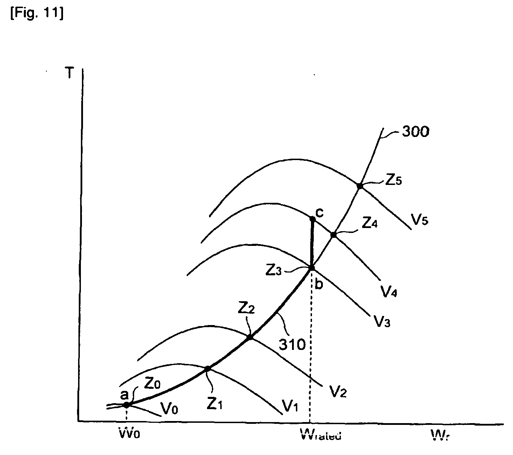

An example of the Wᵣ - Tᵢ function stored in the memory unit 49 is now explained. FIG. 11 is a graph showing a maximum Cp curve with the rotation speed Wᵣ of the rotor on the horizontal axis and the rotor torque T on the vertical axis. The maximum Cp curve 300 is a curve drawn by connecting coordinates (Wᵣ, T) at which the power coefficient Cp becomes maximum. The maximum Cp curve 300 is drawn through the coordinates Z₁ to Z₅ at which the power function Cp becomes maximum with respect to a variety of wind speed (e.g. the wind speed V₀ to V₅). The Wᵣ - Tᵢ function stored in the memory unit 49 may be a function 310 which is defined by the maximum Cp curve 300 between an operating point a and an operating point b and defined by a straight line between the operating point b and an operating point c as indicated by a heavy line in FIG.11. The function 310 is a straight line at which the rotation speed of the rotor is constant at a rated rotation speed W_{rated}. The wind speed V₀ which corresponds to the operating point a is a cut-in wind speed and the wind speed V₄ which corresponds to the operating point c is a wind speed at which the rated power is reached (the rated wind speed). To determine the optimal torque Tᵢ from the function 310, a rotor torque which corresponds to the rotation speed Wᵣ of the rotating shaft 8 detected by the rotation speed sensor 32 may be obtained from the function 310.

With use of the function 310, in a wind speed area between the cut-in wind speed V₀ and the wind speed V₃, the rotation speed Wᵣ of the hydraulic pump 12 (the rotor rotation speed) can be adjusted in accordance with the wind speed in the area between the initial rotation speed W₀ and the rated rotation speed W_{rated}, so as to operate the wind turbine generator in such a condition that the power coefficient Cp is maximum. More specifically, in the variable speed range between the initial rotation speed W₀ and the rated rotation speed W_{rated}, the wind turbine generator can operate at maximum efficiency. Further, in the wind speed area between the wind speed V₃ and the rated wind speed V₄, the rotation speed Wᵣ of the hydraulic pump 12 is maintained at the rated rotation speed W_{rated}. In a high wind speed area between the rated wind speed V₄ and the cut-out wind speed, the pitch angle of the blade 4 is regulated by the actuator (a pitch driving mechanism) 5 to maintain the rated power.

The obtained optimal torque Tᵢ of the hydraulic pump 12 is then corrected by the torque target determination unit 42 to determine the torque target T_{d} of the hydraulic pump 12 as shown in FIG. 10.

The target torque determination unit 42 adjusts the optimal torque Tᵢ by multiplying by a scale factor M to give an adjusted optimal torque MTᵢ. The scale factor M can be any number between zero and one, and would typically be between 0.9 and 1. The multiplication of the scale factor M causes a slight reduction of the actual torque of the hydraulic pump 12 compared to the optimal torque Tᵢ, thus allowing the rotor 2 to accelerate more rapidly during gusts. Accordingly, it is possible to capture more power than if the pump torque were not scaled from the optimal torque Tᵢ. The scale factor M will cause the rotor 2 to decelerate more slowly, thus operating off its optimum operating point during lulls, however the additional power available due to tracking gusts is more significant than power loss due to sub-optimal operation during lulls.

The torque target T_{d} obtained by the target torque determination unit 42 may be the difference between the adjusted optimal torque MTᵢ and the output power of a torque feedback controller 201. The torque feedback controller 201 calculates an estimated aerodynamic torque, Tₐₑᵣₒ, which is the sum of the current torque target and an acceleration torque which is derived from the angular acceleration aᵣ of the rotor 2 multiplied by the moment of rotational inertia of the rotor 2, J. The output of the torque feedback controller 201 is the difference T_{excess} between the estimated aerodynamic torque and the adjusted optimal torque, which is then multiplied by a feedback gain, G to obtain a feedback torque T_{feedback}. The feedback gain G can be any number not less than zero, with a value of zero acting to disable the torque feedback controller 201.

The torque feedback controller 201 subtracts torque from the adjusted optimal torque MTᵢ to slightly reduce the torque target T_{d} in response to the acceleration of the rotor 2, and adds torque to the adjusted optimal torque to slightly increase the torque target T_{d} in response to the deceleration of the rotor 2. This enables the rotor 2 to accelerate and decelerate faster in response to changes in input wind energy than adjusted optimal torque control alone, hence allowing for greater total energy capture from the wind.

The torque target T_{d} obtained by the torque target determination unit 42 is supplied to the pump demand determination unit 43 and used to calculate a demand D_{P} of the displacement of the hydraulic pump 12. The pump demand determination unit 43 calculates the demand D_{P} of the displacement of the hydraulic pump 12 by dividing the target torque T_{d} by the measured oil pressure Pₛ in the high pressure oil line 16. The demand D_{P} may be corrected by a pressure limiter 202. The pressure limiter 202 may be a PID type controller whose output value is the demand D_{P} of the controller. The pressure limiter 202 maintains the pressure of the high pressure oil line 16 within the acceptable range. More specifically, by correcting the pump demanded rate of fluid quanta transfer, the pressure of the high pressure oil line 16 is maintained below a maximum level allowed for safe operation of the wind turbine generator. The pressure limit may be disabled in some operating modes where it is desirable to dissipate energy through the relief valve 62, for instance to prevent the wind turbine generator from operating above the rated speed during extreme gusts. Alternatively, a limit value may be varied depending on the intended use. The pump demand determination unit 43 may correct the demand D_{P} of the displacement of the hydraulic pump 12 based on the oil temperature in the high pressure oil line 16.

Further, the pump demand determination unit 43 may use an adjuster 203 to correct the torque target T_{d} of the hydraulic pump 12 in response to a power demand signal from an external command center such as a farm controller of the wind farm and dispatching center. By this, it is possible to produce sufficient power to meet the demand from the external command center.

The demand D_{P} of the displacement having been calculated in the above manner, is then sent to the pump control unit 44 and the displacement of the hydraulic pump 12 is adjusted to the demand D_{P} by the pump control unit 44. For instance, the pump control unit 44 controls opening and closing of the high pressure valve 86 and the low pressure valve 88 to change a ratio of the working chambers 83 in the active state to the total number of the working chambers, thereby adjusting the displacement of the hydraulic pump 12 to the demand D_{P} of the displacement.

FIG. 12 shows a signal flow of determining a displacement of the hydraulic motor 14ₖ in the transmission controller 40.

As shown in the drawing, the pump target power determination unit 45 calculates a base value of the target output power of the hydraulic pump 12, POWEP₀ by multiplying the target torque T_{d} of the hydraulic pump 12 obtained by the target torque determination unit 42 by the rotation speed Wᵣ of the rotating shaft 8 obtained by the rotation speed sensor 32. In the pump target power determination unit 45, corrected output power POWER_{C} is calculated by an adjuster 212 in response to a power demand signal S_{d} from the external command center 210 such as a farm controller of the wind farm and dispatching center. Then, the corrected output power POWER_{C} is added to the base value POWER₀ of the target output power having been obtained beforehand, so as to calculate the target output power POWER_{P} of the hydraulic pump 12.

The motor target output determination unit 46 calculates the target output power POWER_{M} of the hydraulic motor 14ₖ by processing the target output power POWER_{P} of the hydraulic pump 12 using a first order low pass filter, whose transfer function is H(s)=1/(Ts+1).

Then, the motor demand determination unit 47 calculates the nominal demand Dₙ of the hydraulic motor 14ₖ by dividing the target output power POWER_{M} of the hydraulic motor 14ₖ by the measured oil pressure Pₛ measured by the oil pressure sensor 31 and the measured rotation speed Wₘ of the hydraulic motor 14ₖ measured by the rotation speed sensor 36.

In the motor demand determination unit 47, a corrected demand D_{b} is calculated from the target output power POWER_{M} and then added to the nominal demand Dₙ to obtain a demand D_{M} of displacement of the hydraulic motor 14. The corrected demand D_{b} may be, for instance, calculated by a pressure feedback controller 220 by multiplying the difference between the target pressure Pd of the high pressure oil line 16 and the measured oil pressure Pₛ measured by the pressure sensor 31 by a variable gain Kₚ.

The target pressure P_{d} of the high pressure oil line 16 may be calculated by inputting the current target output power POWER_{M} of the hydraulic motor to a function 230 indicating a relationship between a target motor output power set in advance and the target pressure of the high pressure oil line 16. The function 230 is at least partially defined by a curve in which the target pressure of the high pressure oil line 16 monotonically increases in accordance with increase of the motor target output power. Thus, the target pressure Pd of the high pressure line is set lower in the case where the target motor output power is small (i.e. the discharge rate of the hydraulic pump is low) than the case where the target output power of the hydraulic motor is high (i.e. the discharge rate of the hydraulic pump 12 is high). By this, it is possible to reduce the amount of internal leakage of the operation oil with respect to the discharge rate of the hydraulic pump 12 when the target motor output power is small, thereby suppressing the internal leakage of the operation oil affecting the control of the hydraulic transmission 10.

The variable gain K_{P} is determined using the function 232 in accordance with the current pressure of the high pressure oil line 16, Pₛ (the pressure detected by the pressure sensor), the maximum pressure Pₘₐₓ and the minimum pressure Pₘᵢₙ of the high pressure oil line 16 in an allowable range. For instance, when the current pressure Pₛ is outside the allowable range (i.e. Pₛ<Pₘᵢₙ or Pₛ>Pₘₐₓ), the variable gain Kₚ is set at the maximum gain Kₘₐₓ, and when the current pressure Pₛ is within the allowable range (i.e. Pₛ is not less than Pₘᵢₙ and not greater than Pₘₐₓ), the variable gain Kₚ may be increased toward the maximum gain Kₘₐₓ as the current pressure Pₛ becomes closer to the minimum pressure Pₘᵢₙ or the maximum pressure Pₘₐₓ. By this, when the pressure P ₛ is deviating from the allowable range, or when the pressure Pₛ is no longer in the allowable range, by increasing the variable gain Kₚ (or setting the variable gain at the maximum gain Kₘₐₓ) by which the difference between the pressure Pₛ and the target pressure P_{d} is multiplied, the pressure Pₛ of the high pressure oil line is promptly adjusted to be within the allowable range and also closer to the target pressure P_{d}.

Further, the terminal voltage of the synchronous generator 20ₖ is maintained by controlling the exciter 100 by the exciter controller 100. For instance, as shown in FIG.6, in the comparison circuit 113, a difference between the measured terminal voltage of the synchronous generator 20ₖ measured by the terminal voltage detector 59 and the set value inputted from the synchronizer 120 may be obtained and based on the obtained difference, the gate signal of the thyristor 116 is supplied from the AVR 114. By this, the magnitude of the field current supplied to the field winding 21 of the synchronous generator 20ₖ is adjusted and thus, the terminal voltage of the synchronous generator 20ₖ is maintained at the grid voltage.

As described above, in the embodiments, the command value of the displacement of the hydraulic motor 14ₖ is supplied to the motor control unit 48 from the synchronizer 120 so that before connecting each of the synchronous generators 20ₖ, the frequency and the phase of the terminal voltage of each of the synchronous generators 20ₖ is synchronized with the grid 50. Therefore, without a frequency converting circuit between each of the synchronous generators 20ₖ and the grid 50, it is possible to create a condition for the synchronous generator 20ₖ to be connected to the grid 20 by means of the synchronizer 120.

Further, the displacements of the hydraulic motors 14ₖ are adjusted independently by the motor control unit 48 and thus, it is possible to arbitrarily select which set(s) of the plural sets of the synchronous generator 20ₖ and the hydraulic motor 14ₖ to be used for operation. Thus, it is possible to use only some of the plural sets of the synchronous generator 20ₖ and the hydraulic motor 14ₖ as needed. For instance, to improve the efficiency of the wind turbine generator as a whole during the low load operation, fewer sets of the synchronous generator 20ₖ and the hydraulic motor 14ₖ may be used, or when there is a failure in one or more sets of the synchronous generator 20ₖ and the hydraulic motor 14ₖ, remaining undamaged sets of the synchronous generator 20ₖ and the hydraulic motor 14ₖ may be used to continue the power generation without missing the opportunities of the power generation.

In the wind turbine generator 1, the hydraulic transmission 10 is used as a drive train for transmitting power from the rotor 2 to the generator 20ₖ and thus, the rotating shaft 8 is separated from a generator shaft (the output shaft 15 of the hydraulic motor 14ₖ). Therefore, it is easy to divide the power from the rotating shaft 8 into plural parts and input the divided power to more than one generators 20ₖ, thereby achieving a simple structure of the wind turbine generator 1 having a plurality of generators 20ₖ.

Further, by providing a plurality of generators 20ₖ, it is possible to enhance failure resistance and the opportunities of the power generation of the generators 20ₖ and also to improve the efficiency during the low load operation in comparison to the wind turbine generator having one generator. Particularly, it is known that the synchronous generator 20ₖ equipped with the exciter 100 shown in the example of FIG.6 has inferior efficiency during the low load operation to a permanent magnetic synchronous generator. Thus, by providing a plurality of the synchronous generators 20ₖ having the above structure, it is possible to achieve a significant effect of improving the efficiency during the low load operation.

While the present invention is described below with reference to exemplary embodiments, it is obvious to those skilled in the art that various changes may be made without departing from the scope of the invention.

### Reference Signs List

1 Wind turbine generator
2 Rotor
4 Blade
5 Actuator
6 Hub
7 Pitch controller
8 Rotating shaft
10 Hydraulic transmission
12 Hydraulic pump
14 Hydraulic motor1
15 output shaft
16 High pressure oil line
18 Low pressure oil line
20 Synchronous generator
21 Field winding
22 Nacelle
24 Tower
31 Pressure sensor
32 Rotation speed sensor
33 Anemometer
34 Temperature sensor
36 Rotation speed sensor
40 Transmission controller
41 Optimal torque determination unit
42 Target torque determination unit
43 Pump demand determination unit
44 Pump control unit
45 Pump target power determination unit
46 Motor target power determination unit
47 Motor demand determination unit
48 Motor control unit
49 Memory unit
50 Grid
59 Terminal voltage detector
60 Bypass line
62 Relief valve
64 Accumulator
66 Solenoid valve
70 Oil tank
72 Supplementary line
74 Boost pump
76 Oil filter
78 Return line
79 Low-pressure relief valve
100 Exciter (AC exciter)
102 Field winding
103 Rotary rectifier
106 PMG
110 Exciter controller
113 Comparison circuit
114 AVR
116 Thyristor
120 Synchronizer
122 Circuit breaker
124 Terminal voltage detector
126 Grid voltage detector
201 Torque feedback controller
202 Pressure limiter
203 Adjuster
210 External command center
212 Adjuster
220 Pressure feedback controller
300 Maximum Cp curve
310 Wᵣ - Ti function
500 Step-up gear
510 Squirrel case induction generator
520 Secondary wound-rotor induction generator
530 AC-DC-AC converter (Frequency converting circuit)
540 Synchronous generator
550 AC-DC-AC link (Frequency converting circuit)

## Claims

1. A power generating apparatus of renewable energy type which generates power from renewable energy, the apparatus comprising:
a blade (4);
a rotating shaft (8) which is configured to be rotated by the renewable energy received via the blade (4);
a hydraulic pump (12) which is configured to be driven by the rotating shaft (8) and which generates pressurized oil;
a plurality of hydraulic motors (14) which are configured to be driven by the pressurized oil;
a plurality of synchronous generators (20) which are connected to a grid (50) without an intervening frequency-conversion circuit and which are respectively coupled to the plurality of hydraulic motors;
a motor controller (48) which is configured to adjust a displacement of each of the plurality of hydraulic motors (14) independently; and
a synchronizer (120) which is configured to supply a command value of the displacement of each of the hydraulic motors (14) to the motor controller (48) so that before the synchronous generators (20) are connected to the grid (50), a frequency and a phase of a terminal voltage of each of the synchronous generators are synchronized with the grid (50),
wherein the number of sets of the synchronous generator (20) and the hydraulic motor (14) is N where N is an integer not less than two,
wherein the N synchronous generators (20) are configured to be connected to the grid (50) sequentially in response to increase of a flow speed of the renewable energy, and
wherein the synchronizer (120) is configured to supply the command value to the motor controller (48) to synchronize the frequency and the phase of the terminal voltage of an (i+1)-th synchronous generator (20ᵢ₊₁) with the grid (50) when an output of an i-th synchronous generator (20ᵢ) is lower than a rated power of the i-th synchronous generator (20ᵢ), where i is any integers from 1 to (N-1).

2. The power generating apparatus of renewable energy type according to claim 1,
wherein the motor controller (48) is configured to control the displacement of each of the hydraulic motors (14) so as to maintain the pressurized oil at a target pressure based on a target output value of each of the hydraulic motors, after said each of the synchronous generators (20) is connected to the grid (50).

3. The power generating apparatus of renewable energy type according to claim 1,
wherein the motor controller (48) is configured to increase the displacement of an i-th hydraulic motor (14ᵢ) coupled to the i-th synchronous generator (20ᵢ) to absorb excess energy of the pressurized oil caused during the synchronization of the (i+1)-th synchronous generator (20ᵢ₊₁) such that an (i+1)-th hydraulic motor (14ᵢ₊₁) coupled to the (i+1)-th synchronous generator (20ᵢ₊₁) can be dedicated to the synchronization of the (i+1)-th synchronous generator (20ᵢ₊₁).

4. The power generating apparatus of renewable energy type according to claim 1,
wherein the motor controller (48) is configured to adjust the displacement of the (i+1)-th hydraulic motor (14ᵢ₊₁) to synchronize the frequency and the phase of the terminal voltage of the (i+1)-th synchronous generator (20ᵢ₊₁) with the grid (50) while adjusting the displacement of the i-th hydraulic motor (14ᵢ) to maintain the output of the i-th synchronous generator (20ᵢ).

5. The power generating apparatus of renewable energy type according to claim 1,
wherein the synchronizer (120) is configured to supply the command value to the motor controller (48) to synchronize the frequency and the phase of the terminal voltage of the (i+1)-th synchronous generator (20ᵢ₊₁) with the grid (50) when the output of the i-th synchronous generator (20ᵢ) is not less than 50% of the rated power of the i-th synchronous generator (20ᵢ).

6. The power generating apparatus of renewable energy type according to claim 1,
wherein the motor controller (48)is configured to adjust a displacement of a (i+1)-th hydraulic motor (14ᵢ₊₁) coupled to the (i+1)-th synchronous generator (20ᵢ₊₁) based on the command value from the synchronizer (120) before a (i+1)-th synchronous generator (20ᵢ₊₁) of the N synchronous generators (20) is connected to the grid (50), while adjusting displacements of first to i-th hydraulic motors (14₁-14ᵢ) independently of each other to maintain outputs of first to i-th synchronous generators (20₁-20ᵢ) at minimum load after the i-th synchronous generator (20ᵢ) is connected to the grid (50)

7. The power generating apparatus of renewable energy type according to claim 1, the apparatus further comprising:
a pitch controller (7) which is configured to adjust a pitch angle of the blade (4); and
a pump controller (44) which is configured to adjust a displacement of the hydraulic pump (12),
wherein, the motor controller (48) is configured to adjust, before a first synchronous generator (20₁) of the N synchronous generators (20) is connected to the grid (50), the displacement of a first hydraulic motor (14₁) coupled to the first synchronous generator (20₁) based on the command value from the synchronizer (120) in such a state that the pitch angle of the blade (4) is adjusted by the pitch controller (7) to maintain the rotation speed of the rotating shaft (8) at target rotation speed and the displacement of the hydraulic pump (12) is adjusted by the pump controller (44) to maintain the pressurized oil at a target pressure.

8. The power generating apparatus of renewable energy type according to claim 1,
wherein the synchronous generators (20) are configured to be connected to the grid (50) such that an order of connecting the synchronous generators (20) is determined based on at least one of an accumulated operating time of each of the sets of the synchronous generator (20) and the hydraulic motor (14) and an opening and closing frequency of each circuit breaker (122) which switches a connection state between each of the synchronous generators (20) and the grid (50).

9. The power generating apparatus of renewable energy type according to claim 1, the apparatus further comprising:
a pump controller (44) which is configured to adjust a displacement of the hydraulic pump (12),
wherein the pump controller (44)is configured to adjust the displacement of the hydraulic pump (12) and the motor controller (48) adjusts the displacement of an i-th hydraulic motor (14ᵢ) coupled to the i-th synchronous generator (20ᵢ), so as to gradually increase the output of the i-th synchronous generator (20ᵢ), after an i-th synchronous generator (20ᵢ) of the N synchronous generators (20) is connected to the grid (50).

10. The power generating apparatus of renewable energy type according to claim 1,
wherein, during failure of M of the N synchronous generators (20), the power generating apparatus of renewable energy type is configured to generate power not higher than P_{rated} x (N - M)/N,
where M is an integer of 1 to (N - 1) and P_{rated} is a rated power of the power generating apparatus of renewable energy type.

11. The power generating apparatus of renewable energy type according to claim 1,
wherein all of the synchronous generators (20) having been connected to the grid (50) are configured to be disconnected so as to stop power generation of the power generating apparatus of renewable energy type when a flow speed of the renewable energy falls below a cut-in speed at which the power generating apparatus of renewable energy type starts generating the power.

12. The power generating apparatus of renewable energy type according to claim 1,
wherein at least one of the synchronous generators (20)are configured to generate power to be supplied to an auxiliary device of the power generating apparatus of renewable energy type when all of the synchronous generators (20) are disconnected from the grid (50).

13. The power generating apparatus of renewable energy type according to claim 1,
wherein each of the hydraulic motors (20) comprises:
a plurality of working chambers (83) each surrounded by a cylinder (80) and a piston (82);
a plurality of high-pressure valves (86) for supplying the pressurized oil to each of the working chambers (83);
a plurality of low-pressure valves (88) for discharging the pressurized oil from each of the working chambers (83); and
a casing (91) in which the working chambers (83), the high-pressure valves (86) and the low-pressure valves (88) are arranged,
wherein the power generating apparatus of renewable energy type further comprises a starting valve (17) which is provided outside the casing (91) for each of the hydraulic motors (14), and wherein, when activating each of the hydraulic motors (14), the motor controller (48) is configured to: adjusts a number of the working chambers (83) where the pressurized oil is supplied and discharged, by controlling the opening and closing of the starting valve (17) and the low-pressure valves (88) to accelerate the hydraulic motor (14) to a target valve-switch rotation speed; and adjusts the number of the working chambers (83) where the pressurized oil is supplied and discharged, by controlling the opening and closing of the high-pressure valves (86) and the low-pressure valves to further accelerate the hydraulic motor (14) above the target valve-switch rotation speed.

14. The power generating apparatus of renewable energy type according to claim 1,
wherein the power generating apparatus of renewable energy type is a wind turbine generator (1) which is configured to generate power from wind in a form of the renewable energy.

15. A method of operating a power generating apparatus of renewable energy type which comprises: a rotating shaft (8) which is rotated by renewable energy received via a blade (4); a hydraulic pump (12) which is driven by the rotating shaft (8) and which generates pressurized oil; a plurality of hydraulic motors (14) which are driven by the pressurized oil; and a plurality of synchronous generators (20) which are coupled to the plurality of hydraulic motors (14) respectively, the method comprising the steps of:
adjusting displacements of the plurality of hydraulic motors (14) independently based on a command value from a synchronizer (120) so that a frequency and a phase of a terminal voltage of each of the synchronous generators (20) are synchronized with a grid (50); and
after the step of adjusting the displacements, connecting the plurality of synchronous generators (20) to the grid (50) without an intervening frequency-conversion circuit,
wherein the number of sets of the synchronous generator (20) and the hydraulic motor (14) is N where N is an integer not less than two,
wherein the N synchronous generators (20) are connected to the grid (50) sequentially in response to increase of a flow speed of the renewable energy, and
wherein the frequency and the phase of the terminal voltage of an (i+1)-th synchronous generator (20ᵢ₊₁ is synchronized with the grid (50) when an output of an i-th synchronous generator (20ᵢ) is lower than a rated power of the i-th synchronous generator (20ᵢ), where i is any integers from 1 to (N-1).

## Patentansprüche

1. Vorrichtung zur Stromerzeugung aus erneuerbarer Energie, welche Strom aus erneuerbarer Energie erzeugt, wobei die Vorrichtung umfasst:
ein Rotorblatt (4),
eine rotierende Welle (8), welche dafür ausgelegt ist, durch die über das Rotorblatt (4) aufgenommene erneuerbare Energie in Rotation versetzt zu werden,
eine Hydraulikpumpe (12), welche dafür ausgelegt ist, von der rotierenden Welle (8) angetrieben zu werden, und welche Drucköl erzeugt,
mehrere Hydraulikmotoren (14), welche dafür ausgelegt sind, durch das Drucköl angetrieben zu werden,
mehrere Synchrongeneratoren (20), welche mit einem Netz (50) ohne eine zwischengeschaltete Frequenzumwandlungsschaltung verbunden sind und welche jeweils mit einem der mehreren Hydraulikmotoren gekoppelt sind,
eine Motorsteuereinheit (48), welche dafür ausgelegt ist, eine Verdrängung jedes der mehreren Hydraulikmotoren (14) unabhängig einzustellen, und
eine Synchronisiereinrichtung (120), welche dafür ausgelegt ist, der Motorsteuereinheit (48) einen Vorgabewert der Verdrängung jedes der Hydraulikmotoren (14) zuzuführen, so dass, bevor die Synchrongeneratoren (20) mit dem Netz (50) verbunden werden, eine Frequenz und eine Phase einer Klemmenspannung jedes der Synchrongeneratoren mit dem Netz (50) synchronisiert werden,
wobei die Anzahl der aus dem Synchrongenerator (20) und dem Hydraulikmotor (14) bestehenden Sätze N beträgt, wobei N eine ganze Zahl ist, die nicht kleiner als zwei ist,
wobei die N Synchrongeneratoren (20) dafür ausgelegt sind, in Reaktion auf eine Erhöhung einer Strömungsgeschwindigkeit der erneuerbaren Energie nacheinander mit dem Netz (50) verbunden zu werden, und
wobei die Synchronisiereinrichtung (120) dafür ausgelegt ist, der Motorsteuereinheit (48) den Vorgabewert zuzuführen, um die Frequenz und die Phase der Klemmenspannung eines (i+1)-ten Synchrongenerators (20ᵢ₊₁) mit dem Netz (50) zu synchronisieren, wenn ein Ausgang eines i-ten Synchrongenerators (20ᵢ) kleiner als eine Bemessungsleistung des i-ten Synchrongenerators (20ᵢ) ist, wobei i eine beliebige ganze Zahl von 1 bis (N-1) ist.

2. Vorrichtung zur Stromerzeugung aus erneuerbarer Energie nach Anspruch 1,
wobei die Motorsteuereinheit (48) dafür ausgelegt ist, die Verdrängung jedes der Hydraulikmotoren (14) zu steuern, um das Drucköl auf der Basis eines Zielausgangswertes jedes der Hydraulikmotoren bei einem Zieldruck zu halten, nachdem der jeweilige Synchrongenerator (20) mit dem Netz (50) verbunden worden ist.

3. Vorrichtung zur Stromerzeugung aus erneuerbarer Energie nach Anspruch 1,
wobei die Motorsteuereinheit (48) dafür ausgelegt ist, die Verdrängung eines i-ten Hydraulikmotors (14ᵢ), der mit dem i-ten Synchrongenerator (20ᵢ) gekoppelt ist, zu erhöhen, um überschüssige Energie des Drucköls zu absorbieren, die während der Synchronisation des (i+1)-ten Synchrongenerators (20ᵢ₊₁) verursacht wird, so dass ein (i+1)-ter Hydraulikmotor (14ᵢ₊₁), der mit dem (i+1)-ten Synchrongenerator (20ᵢ₊₁) gekoppelt ist, speziell für die Synchronisation des (i+1)-ten Synchrongenerators (20ᵢ₊₁) vorgesehen werden kann.

4. Vorrichtung zur Stromerzeugung aus erneuerbarer Energie nach Anspruch 1,
wobei die Motorsteuereinheit (48) dafür ausgelegt ist, die Verdrängung des (i+1)-ten Hydraulikmotors (14ᵢ₊₁) einzustellen, um die Frequenz und die Phase der Klemmenspannung des (i+1)-ten Synchrongenerators (20ᵢ₊₁) mit dem Netz (50) zu synchronisieren, während die Verdrängung des i-ten Hydraulikmotors (14ᵢ) so eingestellt wird, dass der Ausgang des i-ten Synchrongenerators (20ᵢ) aufrechterhalten wird.

5. Vorrichtung zur Stromerzeugung aus erneuerbarer Energie nach Anspruch 1,
wobei die Synchronisiereinrichtung (120) dafür ausgelegt ist, der Motorsteuereinheit (48) den Vorgabewert zuzuführen, um die Frequenz und die Phase der Klemmenspannung des (i+1)-ten Synchrongenerators (20ᵢ₊₁) mit dem Netz (50) zu synchronisieren, wenn der Ausgang des i-ten Synchrongenerators (20ᵢ) nicht kleiner als 50 % der Bemessungsleistung des i-ten Synchrongenerators (20ᵢ) ist.

6. Vorrichtung zur Stromerzeugung aus erneuerbarer Energie nach Anspruch 1,
wobei die Motorsteuereinheit (48) dafür ausgelegt ist, eine Verdrängung eines (i+1)-ten Hydraulikmotors (14ᵢ₊₁), der mit dem (i+1)-ten Synchrongenerator (20ᵢ₊₁) gekoppelt ist, auf der Basis des Vorgabewertes von der Synchronisiereinrichtung (120) einzustellen, bevor ein (i+1)-ter Synchrongenerator (20ᵢ₊₁) von den N Synchrongeneratoren (20) mit dem Netz (50) verbunden wird, während die Verdrängungen des ersten bis i-ten Hydraulikmotors (14₁-14ᵢ) unabhängig voneinander eingestellt werden, um Ausgänge des ersten bis i-ten Synchrongenerators (20₁-20ᵢ) bei minimaler Last zu halten, nachdem der i-te Synchrongenerator (20ᵢ) mit dem Netz (50) verbunden worden ist.

7. Vorrichtung zur Stromerzeugung aus erneuerbarer Energie nach Anspruch 1, wobei die Vorrichtung ferner umfasst:
einen Pitch-Regler (7), welcher dafür ausgelegt ist, einen Anstellwinkel des Rotorblattes (4) einzustellen, und
einen Pumpenregler (44), welcher dafür ausgelegt ist, eine Verdrängung der Hydraulikpumpe (12) einzustellen,
wobei die Motorsteuereinheit (48) dafür ausgelegt ist, bevor ein erster Synchrongenerator (20₁) von den N Synchrongeneratoren (20) mit dem Netz (50) verbunden wird, die Verdrängung eines ersten Hydraulikmotors (14ᵢ), der mit dem ersten Synchrongenerator (20₁) gekoppelt ist, auf der Basis des Vorgabewertes von der Synchronisiereinrichtung (120) in einem solchen Zustand einzustellen, dass der Anstellwinkel des Rotorblattes (4) von dem Pitch-Regler (7) so eingestellt wird, dass die Drehzahl der rotierenden Welle (8) bei einer Zieldrehzahl gehalten wird, und die Verdrängung der Hydraulikpumpe (12) von dem Pumpenregler (44) so eingestellt wird, dass das Drucköl bei einem Zieldruck gehalten wird.

8. Vorrichtung zur Stromerzeugung aus erneuerbarer Energie nach Anspruch 1, wobei die Synchrongeneratoren (20) dafür ausgelegt sind, derart mit dem Netz (50) verbunden zu werden, dass eine Reihenfolge des Verbindens der Synchrongeneratoren (20) auf der Basis einer akkumulierten Betriebszeit jedes der Sätze des Synchrongenerators (20) und des Hydraulikmotors (14) und/oder einer Öffnungs- und Schließfrequenz jedes Leistungsschalters (122), welcher einen Verbindungszustand zwischen jedem der Synchrongeneratoren (20) und dem Netz (50) schaltet, bestimmt wird.

9. Vorrichtung zur Stromerzeugung aus erneuerbarer Energie nach Anspruch 1, wobei die Vorrichtung ferner umfasst:
einen Pumpenregler (44), welcher dafür ausgelegt ist, eine Verdrängung der Hydraulikpumpe (12) einzustellen,
wobei der Pumpenregler (44) dafür ausgelegt ist, die Verdrängung der Hydraulikpumpe (12) einzustellen, und die Motorsteuereinheit (48) die Verdrängung eines i-ten Hydraulikmotors (14ᵢ), der mit dem i-ten Synchrongenerator (20ᵢ) gekoppelt ist, einstellt, um den Ausgang des i-ten Synchrongenerators (20ᵢ) allmählich zu erhöhen, nachdem ein i-ter Synchrongenerator (20ᵢ) von den N Synchrongeneratoren (20) mit dem Netz (50) verbunden worden ist.

10. Vorrichtung zur Stromerzeugung aus erneuerbarer Energie nach Anspruch 1,
wobei während eines Ausfalls von M der N Synchrongeneratoren (20) die Vorrichtung zur Stromerzeugung aus erneuerbarer Energie dafür ausgelegt ist, Leistung zu erzeugen, die nicht höher als P_{rated} x (N-M)/N ist, wobei M eine ganze Zahl von 1 bis (N-1) ist und P_{rated} eine Nennleistung der Vorrichtung zur Stromerzeugung aus erneuerbarer Energie ist.

11. Vorrichtung zur Stromerzeugung aus erneuerbarer Energie nach Anspruch 1,
wobei alle Synchrongeneratoren (20), die mit dem Netz (50) verbunden worden sind, dafür ausgelegt sind, von ihm getrennt zu werden, um die Stromerzeugung der Vorrichtung zur Stromerzeugung aus erneuerbarer Energie zu stoppen, wenn eine Strömungsgeschwindigkeit der erneuerbaren Energie unter eine Einschaltdrehzahl fällt, bei welcher die Vorrichtung zur Stromerzeugung aus erneuerbarer Energie beginnt, den Strom zu erzeugen.

12. Vorrichtung zur Stromerzeugung aus erneuerbarer Energie nach Anspruch 1,
wobei wenigstens einer der Synchrongeneratoren (20) dafür ausgelegt ist, Strom zu erzeugen, der einer Hilfsvorrichtung der Vorrichtung zur Stromerzeugung aus erneuerbarer Energie zugeführt wird, wenn alle Synchrongeneratoren (20) vom Netz (50) getrennt sind.

13. Vorrichtung zur Stromerzeugung aus erneuerbarer Energie nach Anspruch 1, wobei jeder der Hydraulikmotoren (20) umfasst:
mehrere Arbeitskammern (83), die jeweils von einem Zylinder (80) und einem Kolben (82) umgeben sind,
mehrere Hochdruckventile (86) zum Zuführen des Drucköls zu jeder der Arbeitskammern (83),
mehrere Niederdruckventile (88) zum Auslassen des Drucköls aus jeder der Arbeitskammern (83), und
ein Gehäuse (91), in welchem die Arbeitskammern (83), die Hochdruckventile (86) und die Niederdruckventile (88) angeordnet sind,
wobei die Vorrichtung zur Stromerzeugung aus erneuerbarer Energie ferner ein Startventil (17), welches außerhalb des Gehäuses (91) vorgesehen ist, für jeden der Hydraulikmotoren (14) umfasst, und
wobei, wenn jeder der Hydraulikmotoren (14) aktiviert wird, die Motorsteuereinheit (48) dafür ausgelegt ist, eine Anzahl der Arbeitskammern (83), denen das Drucköl zugeführt wird und aus denen es ausgelassen wird, durch Steuern des Öffnens und Schließens des Startventils (17) und der Niederdruckventile (88) einzustellen, um den Hydraulikmotor (14) auf eine Ziel-Ventilumschaltungsdrehzahl zu beschleunigen; und die Anzahl der Arbeitskammern (83), denen das Drucköl zugeführt wird und aus denen es ausgelassen wird, durch Steuern des Öffnens und Schließens der Hochdruckventile (86) und der Niederdruckventile einzustellen, um den Hydraulikmotor (14) über die Ziel-Ventilumschaltungsdrehzahl hinaus weiter zu beschleunigen.

14. Vorrichtung zur Stromerzeugung aus erneuerbarer Energie nach Anspruch 1,
wobei die Vorrichtung zur Stromerzeugung aus erneuerbarer Energie ein Windkraftanlagengenerator (1) ist, welcher dafür ausgelegt ist, als Form der erneuerbaren Energie Energie aus Wind zu erzeugen.

15. Verfahren zum Betreiben einer Vorrichtung zur Stromerzeugung aus erneuerbarer Energie, welche umfasst: eine rotierende Welle (8), welche durch über ein Rotorblatt (4) aufgenommene erneuerbare Energie in Rotation versetzt wird, eine Hydraulikpumpe (12), welche von der rotierenden Welle (8) angetrieben wird und welche Drucköl erzeugt, mehrere Hydraulikmotoren (14), welche durch das Drucköl angetrieben werden, und mehrere Synchrongeneratoren (20), welche jeweils mit einem der mehreren Hydraulikmotoren (14) gekoppelt sind, wobei das Verfahren die folgenden Schritte umfasst:
Einstellen von Verdrängungen der mehreren Hydraulikmotoren (14) unabhängig auf der Basis eines Vorgabewertes von einer Synchronisiereinrichtung (120), so dass eine Frequenz und eine Phase einer Klemmenspannung jedes der Synchrongeneratoren (20) mit dem Netz (50) synchronisiert werden;
und
nach dem Schritt des Einstellens der Verdrängungen, Verbinden der mehreren Synchrongeneratoren (20) mit dem Netz (50) ohne eine zwischengeschaltete Frequenzumwandlungsschaltung,
wobei die Anzahl der aus dem Synchrongenerator (20) und dem Hydraulikmotor (14) bestehenden Sätze N beträgt, wobei N eine ganze Zahl ist, die nicht kleiner als zwei ist,
wobei die N Synchrongeneratoren (20) in Reaktion auf eine Erhöhung einer Strömungsgeschwindigkeit der erneuerbaren Energie nacheinander mit dem Netz (50) verbunden werden, und
wobei die Frequenz und die Phase der Klemmenspannung eines (i+1)-ten Synchrongenerators (20ᵢ₊₁) mit dem Netz (50) synchronisiert werden, wenn ein Ausgang eines i-ten Synchrongenerators (20ᵢ) kleiner als eine Bemessungsleistung des i-ten Synchrongenerators (20ᵢ) ist, wobei i eine beliebige ganze Zahl von 1 bis (N-1) ist.

## Revendications

1. Appareil de génération d'énergie de type à énergie renouvelable qui génère de l'énergie à partir d'énergie renouvelable, l'appareil comprenant :
une pale (4) ;
un arbre rotatif (8) qui est configuré pour être entraîné en rotation par l'énergie renouvelable reçue via la pale (4) ;
une pompe hydraulique (12) qui est configurée pour être entraînée par l'arbre rotatif (8) et qui génère de l'huile sous pression ;
une pluralité de moteurs hydrauliques (14) qui sont configurés pour être entraînés par l'huile sous pression ;
une pluralité de générateurs synchrones (20) qui sont raccordés à un réseau (50) sans circuit de conversion de fréquence intermédiaire et qui sont respectivement couplés à la pluralité de moteurs hydrauliques ;
un contrôleur de moteur (48) qui est configuré pour ajuster un déplacement de chacun de la pluralité de moteurs hydrauliques (14) indépendamment ; et
un synchroniseur (120) qui est configuré pour fournir une valeur de commande du déplacement de chacun des moteurs hydrauliques (14) au contrôleur de moteur (48) de sorte qu'avant que les générateurs synchrones (20) ne soient raccordés au réseau (50), une fréquence et une phase d'une tension aux bornes de chacun des générateurs synchrones sont synchronisées avec le réseau (50),
dans lequel le nombre d'ensembles composés du générateur synchrone (20) et du moteur hydraulique (14) est N où N est un nombre entier non inférieur à deux,
dans lequel les N générateurs synchrones (20) sont configurés pour être raccordés au réseau (50) de manière séquentielle en réponse à l'augmentation d'une vitesse d'écoulement de l'énergie renouvelable, et
dans lequel le synchroniseur (120) est configuré pour fournir la valeur de commande au contrôleur de moteur (48) afin de synchroniser la fréquence et la phase de la tension aux bornes d'un (i+1)^{ième} générateur synchrone (20ᵢ₊₁) avec le réseau (50) lorsqu'une puissance de sortie d'un i^{ième} générateur synchrone (20ᵢ) est inférieure à une puissance nominale du i^{ieme} générateur synchrone (20ᵢ), où i est l'un quelconque des nombres entiers allant de 1 à (N-1).

2. Appareil de génération d'énergie du type à énergie renouvelable selon la revendication 1,
dans lequel le contrôleur de moteur (48) est configuré pour contrôler le déplacement de chacun des moteurs hydrauliques (14) afin de maintenir l'huile sous pression à une pression cible en fonction d'une valeur de sortie cible de chacun des moteurs hydrauliques, après que chacun des générateurs synchrones (20) a été raccordé au réseau (50).

3. Appareil de génération d'énergie du type à énergie renouvelable selon la revendication 1,
dans lequel le contrôleur (48) est configuré pour augmenter le déplacement d'un i^{ième} moteur hydraulique (14ᵢ) couplé au i^{ième} générateur synchrone (20ᵢ) pour absorber l'énergie en excès de l'huile sous pression provoquée pendant la synchronisation du (i+1)^{ième} générateur synchrone (20ᵢ₊₁) de sorte qu'un (i+1)^{ième} moteur hydraulique (14ᵢ₊₁) couplé au (i+1)^{ième} générateur synchrone (20ᵢ₊₁) peut être dédié à la synchronisation du (i+1)^{ième} générateur synchrone (20ᵢ₊₁).

4. Appareil de génération d'énergie du type à énergie renouvelable selon la revendication 1,
dans lequel le contrôleur de moteur (48) est configuré pour ajuster le déplacement du (i+1)^{ième} moteur hydraulique (14ᵢ₊₁) pour synchroniser la fréquence et la phase de la tension aux bornes du (i+1)^{ième} générateur synchrone (20ᵢ₊₁) avec le réseau (50) tout en ajustant le déplacement du i^{ième} moteur hydraulique (14ᵢ) afin de maintenir la puissance de sortie du i^{ième} générateur synchrone (20ᵢ).

5. Appareil de génération d'énergie du type à énergie renouvelable selon la revendication 1,
dans lequel le synchroniseur (120) est configuré pour fournir la valeur de commande au contrôleur de moteur (48) afin de synchroniser la fréquence et la phase de la tension aux bornes du (i+1)^{ième} générateur synchrone (20ᵢ₊₁) avec le réseau (50) lorsque la puissance de sortie du i^{ième} générateur synchrone (20ᵢ) est inférieure à 50 % de la puissance nominale du i^{ième} générateur synchrone (20ᵢ).

6. Appareil de génération d'énergie du type à énergie renouvelable selon la revendication 1,
dans lequel le contrôleur de moteur (48) est configuré pour ajuster un déplacement d'un (i+1)^{ième} moteur hydraulique (14ᵢ₊₁) couplé au (i+1)^{ième} générateur synchrone (20ᵢ₊₁) en fonction de la valeur de commande du synchroniseur (120) avant qu'un (i+1)^{ième} générateur synchrone (20ᵢ₊₁) des N générateurs synchrones (20) ne soit raccordé au réseau (50), tout en ajustant les déplacements du premier au i^{ième} moteur hydraulique (14₁-14ᵢ) indépendamment les uns des autres afin de maintenir les puissances de sortie du premier au i^{ième} générateur synchrone (20₁-20ᵢ) à la charge minimum après que le i^{ième} générateur synchrone (20ᵢ) a été raccordé au réseau (50).

7. Appareil de génération d'énergie du type à énergie renouvelable selon la revendication 1, l'appareil comprenant en outre :
un organe de commande de pas (7) qui est configuré pour ajuster un angle de pas de la pale (4) ; et
un organe de commande de pompe (44) qui est configuré pour ajuster un déplacement de la pompe hydraulique (12),
dans lequel, le contrôleur de moteur (48) est configuré pour ajuster, avant qu'un premier générateur synchrone (20₁) des N générateurs synchrones (20) ne soit raccordé au réseau (50), le déplacement d'un premier moteur hydraulique (14₁) couplé au premier générateur synchrone (20₁) en fonction sur la valeur de commande du synchroniseur (120) dans un état tel que l'angle de pas de la pale (4) est ajusté par l'organe de commande de pas (7) afin de maintenir la vitesse de rotation de l'arbre rotatif (8) à une vitesse de rotation cible et le déplacement de la pompe hydraulique (12) est ajusté par l'organe de commande de pompe (44) afin de maintenir l'huile sous pression à une pression cible.

8. Appareil de génération d'énergie du type à énergie renouvelable selon la revendication 1,
dans lequel les générateurs synchrones (20) sont configurés pour être raccordés au réseau (50) de sorte qu'un ordre pour raccorder les générateurs synchrones (20) est déterminé en fonction d'au moins l'un parmi un temps de fonctionnement accumulé de chacun des ensembles composés du générateur synchrone (20) et du moteur hydraulique (14) et une fréquence d'ouverture et de fermeture de chaque disjoncteur (122) qui commute un état de raccordement entre chacun des générateurs synchrones (20) et le réseau (50).

9. Appareil de génération d'énergie du type à énergie renouvelable selon la revendication 1, l'appareil comprenant en outre :
un organe de commande de pompe (44) qui est configuré pour ajuster un déplacement de la pompe hydraulique (12),
dans lequel l'organe de commande de pompe (44) est configuré pour ajuster le déplacement de la pompe hydraulique (12) et le contrôleur de moteur (48) ajuste le déplacement d'un i^{ième} moteur hydraulique (14ᵢ) couplé au i^{ieme} générateur synchrone (20ᵢ), afin d'augmenter progressivement la puissance de sortie du i^{ième} générateur synchrone (20ᵢ), après qu'un i^{ième} générateur synchrone (20ᵢ) des N générateurs synchrones (20) a été raccordé au réseau (50).

10. Appareil de génération d'énergie du type à énergie renouvelable selon la revendication 1,
dans lequel, pendant la défaillance de M des N générateurs synchrones (20), l'appareil de génération d'énergie du type à énergie renouvelable est configuré pour générer de l'énergie avec une valeur non supérieure à P_{rated} x (N-M) /N, où M est un nombre entier de 1 à (N-1) et P_{rated} est une puissance nominale de l'appareil de génération d'énergie de type à énergie renouvelable.

11. Appareil de génération d'énergie du type à énergie renouvelable selon la revendication 1,
dans lequel tous les générateurs synchrones (20) ayant été raccordés au réseau (50) sont configurés pour être déconnectés afin d'arrêter la génération d'énergie de l'appareil de génération d'énergie de type à énergie renouvelable lorsqu'une vitesse d'écoulement de l'énergie renouvelable chute au-dessous d'une vitesse de démarrage à laquelle l'appareil de génération d'énergie de type à énergie renouvelable commence à générer de l'énergie.

12. Appareil de génération d'énergie du type à énergie renouvelable selon la revendication 1,
dans lequel au moins l'un des générateurs synchrones (20) est configuré pour générer de l'énergie destinée à être amenée à un dispositif auxiliaire de l'appareil de génération d'énergie de type à énergie renouvelable lorsque tous les générateurs synchrones (20) sont déconnectés du réseau (50).

13. Appareil de génération d'énergie du type à énergie renouvelable selon la revendication 1,
dans lequel chacun des moteurs hydrauliques (20) comprend :
une pluralité de chambres de travail (83) chacune entourées par un cylindre (80) et un piston (82) ;
une pluralité de valves haute pression (86) pour amener l'huile sous pression à chacune des chambres de travail (83) ;
une pluralité de valves basse pression (88) pour décharger l'huile sous pression de chacune des chambres de travail (83) ; et
un boîtier (91) dans lequel les chambres de travail (83), les valves haute pression (86) et les valves basse pression (88) sont agencées,
dans lequel l'appareil de génération d'énergie de type à énergie renouvelable comprend en outre une valve de démarrage (17) qui est prévue à l'extérieur du boîtier (91) pour chacun des moteurs hydrauliques (14), et
dans lequel, lors de l'activation de chacun des moteurs hydrauliques (14), le contrôleur de moteur (48) est configuré pour : ajuster un nombre de chambres de travail (83) dans lesquelles l'huile sous pression est amenée et déchargée, en contrôlant l'ouverture et la fermeture de la valve de démarrage (17) et des valves basse pression (88) afin d'accélérer le moteur hydraulique (14) jusqu'à une vitesse de rotation de commutateur-valve cible ; et ajuster le nombre de chambres de travail (83) dans lesquelles l'huile sous pression est amenée et déchargée, en contrôlant l'ouverture et la fermeture des valves haute pression (86) et des valves basse pression pour continuer à accélérer le moteur hydraulique (14) au-dessus de la vitesse de rotation de commutateur-valve cible.

14. Appareil de génération d'énergie du type à énergie renouvelable selon la revendication 1,
dans lequel l'appareil de génération d'énergie de type à énergie renouvelable est un générateur d'éolienne (1) qui est configuré pour générer de l'énergie à partir du vent sous la forme de l'énergie renouvelable.

15. Procédé pour actionner un appareil de génération d'énergie du type à énergie renouvelable qui comprend : un arbre rotatif (8) qui est entraîné en rotation par l'énergie renouvelable reçue via une pale (4) ; une pompe hydraulique (12) qui est entraînée par l'arbre rotatif (8) et qui génère l'huile sous pression ; une pluralité de moteurs hydrauliques (14) qui sont entraînés par l'huile sous pression ; et une pluralité de générateurs synchrones (20) qui sont couplés à la pluralité de moteurs hydrauliques (14) respectivement, le procédé comprenant les étapes consistant à _{:}
ajuster les déplacements de la pluralité de moteurs hydrauliques (14) indépendamment en fonction d'une valeur de commande d'un synchroniseur (120) de sorte qu'une fréquence et une phase d'une tension aux bornes de chacun des générateurs synchrones (20) sont synchronisées avec un réseau (50) ; et
après l'étape consistant à ajuster les déplacements, raccorder la pluralité de générateurs synchrones (20) au réseau (50) sans circuit de conversion de fréquence intermédiaire,
dans lequel le nombre d'ensembles composés du générateur synchrone (20) et du moteur hydraulique (14) est N où N est un nombre entier non inférieur à deux,
dans lequel les N générateurs synchrones (20) sont raccordés au réseau (50) de manière séquentielle en réponse à l'augmentation d'une vitesse d'écoulement de l'énergie renouvelable, et
dans lequel la fréquence et la phase de la tension aux bornes d'un (i+1)^{ième} générateur synchrone (20ᵢ₊₁) sont synchronisées avec le réseau (50) lorsqu'une puissance de sortie d'un i^{ieme} générateur synchrone (20ᵢ) est inférieure à une puissance nominale du i^{ième} générateur synchrone (20ᵢ), où i est l'un quelconque des nombres entiers allant de 1 à (N-1).
